# EUROPÄISCHE PATENTSCHRIFT

(11) **EP 1 451 035 B1**
(45) Veröffentlichungstag und Bekanntmachung des Hinweises auf die Patenterteilung: **10.10.2007**
(21) Anmeldenummer: 03756425.9
(22) Anmeldetag: 19.08.2003
(51) Int. Cl.: B60N 2/46, A47C 7/54

(54) **ARMLEHNE**
ARMREST
REPOSE-BRAS

(30) Priorität: 19.08.2002 DE 10238621; 18.08.2003 DE 10338414
(43) Veröffentlichungstag der Anmeldung: 01.09.2004
(73) Patentinhaber: GRAMMER AG, 92224 Amberg (DE)
(72) Erfinder: HIMMELHUBER, Erwin, 92237 Sulzbach-Rosenberg (DE); ALBU, Alexander, 93073 Neutraubling (DE); DELLING, Gerhard, 92546 Schmidgaden (DE)
(74) Vertreter: Ostriga, Sonnet, Wirths & Roche
(86) Internationale Anmeldenummer: PCT/DE2003/002784
(87) Internationale Veröffentlichungsnummer: WO 2004/018252

(56) Entgegenhaltungen:
- EP-A- 1 164 051
- DE-U- 29 512 686
- US-A- 4 466 664
- US-A- 4 969 686

## Beschreibung

Die Erfindung betrifft eine Armlehne, wie Mittelarmlehne, entsprechend dem Oberbegriff des Anspruchs 1. Eine solche Armlehne für Kraftwagen ist in der DE 295 12 686 U1 beschrieben.

Eine gattungsgemäße Armlehne soll mindestens ca. 80 daN ertragen, bevor eine Beschädigung eintritt. Wünschenswert ist es jedoch, Sicherheitsreserven vorzusehen und die Armlehne mit einer Überlastsicherung auszustatten, welche bereits bei ca. 30 daN wirksam wird, dann also beispielsweise ein Zahnrichtgesperre entlastet, so dass bei Auftreten dieser Grenzlast der Armlehnenkörper bis zu einem fahrzeugfesten Anschlag nach unten ausweichen kann. Eine solche Überlastsicherung ist allgemein bekannt und in der vorerwähnten DE 295 12 686 U1 beispielsweise beschrieben.

Die Überlastsicherung gemäß der DE 295 12 686 U1 wird indessen als nachteilig empfunden, weil deren Elemente an weit voneinander distanzierten Stellen des Armlehnengrundkörpers angeordnet sind und deshalb eine gegliederte raumaufwendige Bauweise bedingen.

Bei einer eine sehr kompakte Bauform aufweisenden Armlehne gemäß der EP 1 164 051 A1 bilden ein Primärteil und ein Sekundärteil einander zugewandte, zu einer Achse (Zentralachse) koaxiale, etwa nach Art einer Stirnzahnkupplung angeordnete Stirnverzahnungen, wobei das am Armlehnenkörper befestigte Primärteil drehbar ist. Die entsprechend der EP 1 164 051 A1 nach Art einer Hirth-Verzahnung wie bei einer Stirnzahnkupplung angeordneten, jedoch Gleit- und Sperrflanken aufweisenden Sperrzähne ermöglichen trotz der sehr kleinen Bauweise von Primär- und Sekundärteil eine Aufnahme großer Dreh- bzw. Lastmomente. Die Stirnverzahnung von Primärteil und Sekundärteil bilden daher gemeinsam ein Zahnrichtgesperre. Zugleich gestattet es die bekannte Armlehne mit Hilfe einer Steuereinrichtung zu bestimmen, bei welchem Schwenkwinkelbereich Primärteil und Sekundärteil miteinander in Eingriff gelangen sollen, um in dem ausgewählten Bereich einen Abwärtsschwenk des Armlehnenkörpers zu sperren.

Entsprechend der EP 1 164 051 A1 drückt eine koaxial zum Sekundärteil und zum Primärteil angeordnete Druckfeder das an dem Armlehnenkörper befestigte Primärteil axial gegen das Sekundärteil. Eine Axialbeweglichkeit des Primärteils ist durch ein auf der gemeinsamen Zentralachse befestigtes plattenartiges Widerlagerteil begrenzt.

Um eine Beschädigung der eine kompakte Bauform aufweisenden Armlehne gemäß der EP 1 164 051 A1 zu vermeiden, ist es ebenfalls wünschenswert, die Armlehne mit einer Überlastsicherung auszustatten, welche, wie bereits erwähnt, bei ca. 30 daN wirksam wird, also das Zahnrichtgesperre entlastet, so dass bei Auftreten dieser Grenzlast der Armlehnenkörper nach unten ausweichen kann. Die vorbeschriebene bekannte Überlastsicherung entsprechend der DE 295 12 686 U1 weist jedoch die nachteilige raumaufwendige Bauform auf.

Ausgehend von der eingangs beschriebenen Armlehne gemäß der DE 295 12 686 U1, liegt der Erfindung die Aufgabe zugrunde, die bekannte Armlehne so weiterzuentwickeln, dass sie eine in den mechanischen Bereich einer Armlehne gut integrierbare kompakte raumsparende Bauweise ermöglicht.

Diese Aufgabe wird entsprechend der Gesamtheit der Merkmale des Anspruchs 1 gelöst.

Entsprechend der Erfindung ist an der dem Armlehnenkörper abgewandten Seite des Widerlagerteils ein sich mit einer Federrückstellkraft gegen das Widerlagerteil abstützendes Druckteil auf der Achse drehfest und axial verschieblich angeordnet, wobei das Widerlagerteil und das Druckteil jeweils zwei sich axial erstreckende und mit ihren freien Endbereichen gegeneinander gerichtete und ineinander greifende kupplungsklauenartige Vorsprünge aufweisen. Dabei liegen die kupplungsklauenartigen Vorsprünge des Widerlagerteils und des Druckteils bezüglich eines Aufwärtsschwenks des Armlehnenkörpers mit sich axial und radial erstreckenden Anschlagflächen und bezüglich eines Abwärtsschwenks des Armlehnenkörpers mit sich schräg zur Achse erstreckenden schrägen Gleitflächen aneinander.

Falls demnach auf den Armlehnenkörper eine abwärts gerichtete Grenzlast von z.B. etwa 30 daN einwirkt und als Drehmoment an das auf der Achse unverschiebliche Widerlagerteil weitergeleitet wird, drücken die schrägen Gleitflanken der kupplungsklauenartigen Vorsprünge des Widerlagerteils in Umfangsrichtung gegen die schrägen Gleitflächen der kupplungsklauenartigen Vorsprünge des Druckteils. Dies hat zur Folge, dass das Druckteil, welches axial verschieblich, jedoch drehfest auf der Achse angeordnet ist, entgegen der Federrückstellkraft, z.B. eines Tellerfederpakets, axial vom Widerlagerteil weggedrängt wird.

Dies geschieht in einem solchen Maße, dass die schrägen Gleitflächen der kupplungsklauenartigen Vorsprünge des Widerlagerteils an den schrägen Gleitflächen der kupplungsklauenartigen Vorsprünge des Druckteils hinweggleiten und letzteres axial vom Widerlagerteil wegdrängen, während das Sekundärteil auf solche Weise eine Ausweichdrehung ausführt.

Entsprechend der Erfindung ist das Widerlagerteil mit dem Armlehnenkörper drehverbindbar. Das Widerlagerteil bildet demnach gewissermaßen ein Bindeglied zwischen dem Armlehnenkörper und der Überlastsicherung. Das Widerlagerteil lässt sich deshalb vorteilhaft als Integrationsbaustein für die Verstellmechanik einer Armlehne nutzen.

Dies geschieht in eigenartiger Ausgestaltung der Erfindung dadurch, dass das Widerlager als Bindeglied zum Armlehnenkörper zugleich Bestandteil der Verstellmechanik ist, indem das Widerlagerteil über ein Sekundärteil eines Zahnrichtgesperres mit dem Armlehnenkörper in dessen Abwärtsdrehrichtung drehverbunden ist.

In diesem Zusammenhang ist besonders geeignet ein nur beim Abwärtsschwenk des Armlehnenkörpers sperrendes Zahnrichtgesperre, welches ein mit dem Armlehnenkörper drehverbundenes, um die Achse drehbares Primärteil aufweist, mit welchem das bezüglich der Achse zumindest begrenzt drehfest gehaltene Sekundärteil kooperiert, wobei dem Zahnrichtgesperre eine Steuereinrichtung zugeordnet ist, welche bei aufrechter Position und beginnendem Abwärtsschwenk des Armlehnenkörpers Primärteil und Sekundärteil voneinander trennt und im Bereich der abgesenkten Position wieder in Eingriff miteinander versetzt, wobei Primärteil und Sekundärteil einander zugewandte, zur Achse koaxiale, etwa nach Art einer Stirnzahnkupplung angeordnete Stirnverzahnungen bilden und Primärteil und/oder Sekundärteil axial beweglich sind, und wobei die Primärteil und Sekundärteil in oder außer Eingriff versetzende Steuereinrichtung mindestens einen mit dem Primärteil umlaufenden Steuernocken oder mindestens eine mit dem Primärteil umlaufende Steuerbahn und, dazu korrelierend, mindestens eine mit dem Sekundärteil feste Steuerbahn oder mindestens einen mit dem Sekundärteil festen Steuernocken bildet.

Dabei ist es wichtig, dass Primärteil und Sekundärteil einander zugewandte, zur Achse koaxiale, etwa nach Art einer Stirnzahnkupplung angeordnete Stirnverzahnungen bilden und dass Primärteil und/oder Sekundärteil axial beweglich sind.

Die entsprechend der Erfindung nach Art einer Hirth-Verzahnung einer Stirnzahnkupplung angeordneten, jedoch Gleit- und Sperrflanken aufweisenden Sperrzähne ermöglichen bei sehr kleiner Bauweise von Primär- und Sekundärteil eine Aufnahme großer Dreh- bzw. Lastmomente. Zugleich gestattet es diese Bauart, mit Hilfe einer Steuereinrichtung zu bestimmen, bei welchem Schwenkwinkelbereich Primärteil und Sekundärteil miteinander in Eingriff gelangen sollen, um in dem ausgewählten Bereich einen Abwärtsschwenk des Armlehnenkörpers zu sperren.

Als Steuereinrichtung sieht die Erfindung mindestens einen mit dem Primärteil umlaufenden Steuernocken oder mit mindestens eine mit dem Primärteil umlaufende Steuerbahn und, dazu als jeweils Gegenstück, mindestens eine mit dem Sekundärteil feste Steuerbahn oder mindestens einen mit dem Sekundärteil festen Steuernocken vor.

Ein besonders zweckmäßiges Erfindungsmerkmal besteht darin, dass zwischen dem Primärteil und dem Sekundärteil ein mit dem Primärteil drehverbundener Steuerring angeordnet ist, welcher auf seiner dem Sekundärteil zugewandten Seite den Steuernocken oder die Steuerbahn bildet. Der ein gesondertes Bauteil bildende erfindungsgemäße Steuerring lässt sich entsprechend den individuellen Erfordernissen einer Steuerung besser gestalten, als es bei einer mit dem Primärteil integrierten Bauform der Fall wäre.

Außerdem lässt sich der Steuerring in besonders raumsparender Weise in die zwischen Primärteil und Sekundärteil vorhandene Fuge hineinschachteln, indem entsprechend der Erfindung Primärteil und Sekundärteil im wesentlichen kreiszylindrische Ausnehmungen bilden, deren Öffnungen einander zugewandt sind und die gemeinsam den Steuerring aufnehmen.

Die Aufnahmefähigkeit großer Dreh- bzw. Lastmomente durch die Stirnverzahnungen von Primärteil und Sekundärteil ist entsprechend der Erfindung dadurch optimiert worden, dass Primärteil und Sekundärteil jeweils eine die Stirnverzahnung tragende radiale Kreisringfläche bilden, welche dadurch besonders groß ausgelegt werden kann, dass die Außenkontur der Kreisringfläche zugleich die Außenkontur der Querschnittsfläche von Primärteil und/oder Sekundärteil bildet, wobei sich die Stirnverzahnung gleichflächig jeweils über den gesamten Umfang von Primärteil und Sekundärteil erstreckt.

Um die Abwärtsbewegung des Armlehnenarms zu sperren, greifen also gemäß der Erfindung sämtliche Zähne, also eine Vielzahl von Zähnen, ineinander, während beim Bekannten (DE 199 15 469 A1) nur ein Zahn, nämlich der Zahn der Sperrklinke, in eine raumfeste Zahnlücke eingreift.

Andererseits wird die Abhängigkeit des Steuerringes von der Schwenkbewegung des Armlehnenkörpers für einen begrenzten Umfangswinkelbereich dadurch aufgehoben, dass das Primärteil einen zum Sekundärteil hinweisenden Mitnehmernocken aufweist, welcher in eine zum Primärteil weisende Mitnahmeaussparung des Steuerringes eingreift, der an seiner dem Sekundärelement zugewandten Seite mindestens einen, insbesondere zwei Steuernocken bildet, welcher/welche mit der mit dem Sekundärelement festen Steuerbahn kooperiert/kooperieren, wobei in besonderer Weise die Mitnahmeaussparung des Steuerringes eine größere Umfangserstreckung als der Mitnehmernocken des Primärteils aufweist.

Dabei erhält das Primärteil sowohl bei abgesenkter Position und beginnendem Aufwärtsschwenk als auch bei aufrechter Position und beginnendem Abwärtsschwenk des Armlehnenkörpers einen Vorlauf bis zum Anschlag des Mitnehmernockens an der jeweiligen ersten oder zweiten Anschlagfläche der Mitnahmeaussparung.

In weiterer Ausgestaltung der Erfindung weist bei einer abgewandelten Ausführungsform die Achse auf gesamter axialer Länge ein Keilwellenprofil auf, wobei auf der Achse das Widerlagerteil mit einer glatten zentralen Durchgangsbohrung drehbar gelagert ist, während das Druckteil mittels einer entsprechend dem Keilwellenprofil profilierten zentralen Aufnahme drehfest auf der Achse angeordnet ist.

Unter Vermeidung eines relativ aufwendigen Formdrehteils für die zentrale Achse, kann entsprechend der vorliegenden Erfindung ein Keilwellenprofil zur Anwendung gelangen, dessen Querschnitt auf gesamter axialer Länge derselbe ist. Derartige Keilwellenprofile sind gewissermaßen als Meterware erhältlich. Ein solches Keilwellenprofil bietet zugleich den Vorteil, dass das Widerlagerteil mit seiner glatten zentralen Durchgangsbohrung auf dem Keilwellenprofil drehbar gelagert ist. Falls hingegen eine drehfeste Verbindung zur Achse erwünscht ist, wie z.B. bei dem Druckteil, kann dieses mittels einer entsprechend dem Keilwellenprofil profilierten zentralen Aufnahme des Druckteils durchgeführt werden.

Das Keilwellenprofil gestattet im Bedarfsfall auch eine Axialverschiebung auf der Achse, und zwar sowohl der mit einer glatten Durchgangsbohrung versehenen Elemente als auch des mit einer dem Keilwellenprofil entsprechenden Aufnahme versehenen Druckteils. Für den Fall, dass eines der vorgenannten Elemente, sei es ein mit einer glatten zentralen Durchgangsbohrung versehenes Element oder sei es ein mit einer entsprechend dem Keilwellenprofil profilierten zentralen Aufnahme versehenes Element, auf der Achse unverschieblich festgelegt werden soll, sieht die Erfindung vor, dass die Achse mindestens eine an ihrem Außenumfang angeordnete Aufnahme, wie z.B. eine Ringnut zur Halterung eines axialen Sicherungselements, wie z.B. eines Seegerringes, aufweist.

Zusätzliche Erfindungsmerkmale sind den Unteransprüchen zu entnehmen.

In den Zeichnungen sind bevorzugte Ausführungsbeispiele entsprechend einer ersten Ausführungsform (Fig. 1-10C) und entsprechend einer zweiten Ausführungsform (Fig. 11-17A) dargestellt, es zeigt,
Fig. 1 eine räumliche Darstellung des mechanischen Bereichs einer Armlehne,
Fig. 2 in Anlehnung an Fig. 1 den mechanischen Bereich ohne ein die inneren Bauteile des mechanischen Bereichs verkleidendes Hüllrohr,
Fig. 3 und 4 in Anlehnung an die Darstellung gemäß Fig. 2 eine auseinandergezogene räumliche Darstellung mit einem schematisch dargestellten Armauflageteil unter zwei unterschiedlichen Blickwinkeln,
Fig. 5 in Anlehnung an die Darstellung gemäß Fig. 3 eine um etwa 180° gewendete Darstellung,
Fig. 6 die Seitenansicht eines Primärteils in einer durch die Fig. 2 und 3 vorgegebenen Einbaulage,
Fig. 6A die Stirnansicht des Primärteils gemäß dem in Fig. 6 mit VIA bezeichneten Ansichtspfeil,
Fig. 6B einen Radialschnitt entsprechend der in Fig. 6A mit VIB-VIB bezeichneten Schnittlinie,
Fig. 7 eine Stirnansicht eines Steuerringes,
Fig. 7A einen Radialschnitt entsprechend der in Fig. 7 mit VIIA-VIIA bezeichneten Schnittlinie, wobei Fig. 7A der Einbaulage gemäß Fig. 3 entspricht,
Fig. 7B eine Seitenansicht des Steuerringes in einer gegenüber der Einbaulage gemäß Fig. 7A um 180° gewendeten Darstellung,
Fig. 7C eine Stirnansicht entsprechend dem mit VIIC bezeichneten Ansichtspfeil in Fig. 7B,
Fig. 8 eine Seitenansicht eines Sekundärteils in der Einbaulage gemäß Fig. 3,
Fig. 8A eine Stirnansicht entsprechend dem in Fig. 8 mit VIIIA bezeichneten Ansichtspfeil,
Fig. 8B ein Radialschnitt entsprechend der in Fig. 8A mit VIIIB-VIIIB bezeichneten Schnittlinie,
Fig. 8C einen im Vergleich zu Fig. 8B um 90° gedrehten Radialschnitt gemäß der Schnittlinie VIIIC-VIIIC in Fig. 8A,
Fig. 8D eine Stirnansicht entsprechend dem in Fig. 8 mit VIIID bezeichneten Ansichtspfeil,
Fig. 9 eine Seitenansicht eines Widerlagerteils entsprechend der Einbaulage gemäß Fig. 3,
Fig. 9A eine Stirnansicht entsprechend dem in Fig. 9 mit IX bezeichneten Ansichtspfeil,
Fig. 9B eine Stirnansicht entsprechend dem in Fig. 9 mit IXB bezeichneten Ansichtspfeil,
Fig. 9C einen Radialschnitt entsprechend der in Fig. 9B mit IXC-IXC bezeichneten Schnittlinie,
Fig. 9D einen gegenüber Fig. 9C um 90° gedrehten Radialschnitt entsprechend der in Fig. 9B mit IXD-IXD bezeichneten Schnittlinie,
Fig. 10 eine Stirnansicht auf ein Druckteil, ansonsten auch entsprechend dem in Fig. 10B mit X bezeichneten Ansichtspfeil,
Fig. 10A einen Radialschnitt entsprechend der in Fig. 10 mit XA-XA bezeichneten Schnittlinie,
Fig. 10B eine Seitenansicht entsprechend dem in Fig. 10 mit XB bezeichneten Ansichtspfeil,
Fig. 10C eine Stirnansicht entsprechend dem in Fig. 10B mit XC bezeichneten Ansichtspfeil,
Fig. 11 eine räumliche Darstellung des mechanischen Bereichs einer Armlehne als abgewandelter Bauform,
Fig. 12 in Anlehnung an Fig. 11 den mechanischen Bereich ohne ein die inneren Bauteile des mechanischen Bereichs verkleidendes Hüllrohr,
Fig. 13 in Anlehnung an Fig. 12 eine auseinandergezogene räumliche Darstellung mit einem schematisch dargestellten Armauflageteil,
Fig. 14 die Seitenansicht des Primärteils in einer durch die Fig. 12 und 13 vorgegebenen Einbaulage,
Fig. 14A die Stirnansicht des Primärteils gemäß dem in Fig. 14 mit XIVA bezeichneten Ansichtspfeil,
Fig. 14B einen Radialschnitt entsprechend der in Fig. 14A mit Fig. XIVB-XIVB bezeichneten Schnittlinie,
Fig. 15 eine Stirnansicht des Steuerringes,
Fig. 15A einen Radialschnitt entsprechend der in Fig. 15 mit XVA-XVA bezeichneten Schnittlinie, wobei Fig. 15A der Einbaulage gemäß den Fig. 12 und 13 entspricht,
Fig. 15B eine Seitenansicht des Steuerringes in einer gegenüber der Einbaulage gemäß Fig. 15A um 180° gewendeten Darstellung,
Fig. 15C eine Stirnansicht entsprechend dem mit XVC bezeichneten Ansichtspfeil in Fig. 7B,
Fig. 16 eine Seitenansicht des Sekundärteils in der Einbaulage gemäß den Fig. 12 und 13,
Fig. 16A eine Stirnansicht entsprechend dem in Fig. 16 mit XVIA bezeichneten Ansichtspfeil,
Fig. 16B ein Radialschnitt entsprechend der in Fig. 16A mit XVIB-XVIB bezeichneten Schnittlinie,
Fig. 16C einen im Vergleich Fig. 16B um 90° gedrehten Radialschnitt gemäß der Schnittlinie XVIC-XVIC in Fig. 16A,
Fig. 16D eine Stirnansicht entsprechend dem in Fig. 16 mit XVID bezeichneten Ansichtspfeil,
Fig. 17 eine Stirnansicht entsprechend dem in Fig. 17A mit XVII bezeichneten Ansichtspfeil und
Fig. 17A einen Radialschnitt entsprechend der in Fig. 17 mit XVIIA-XVIIA bezeichneten Schnittlinie.

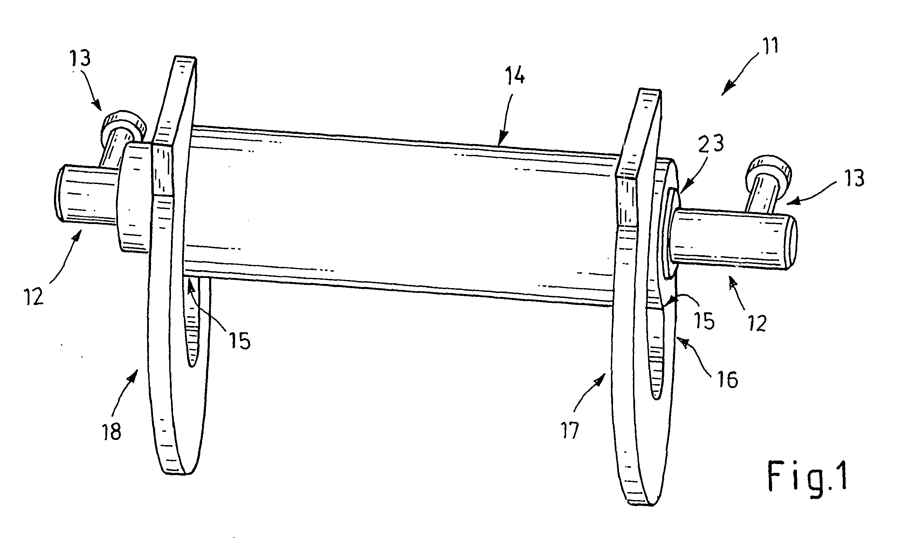

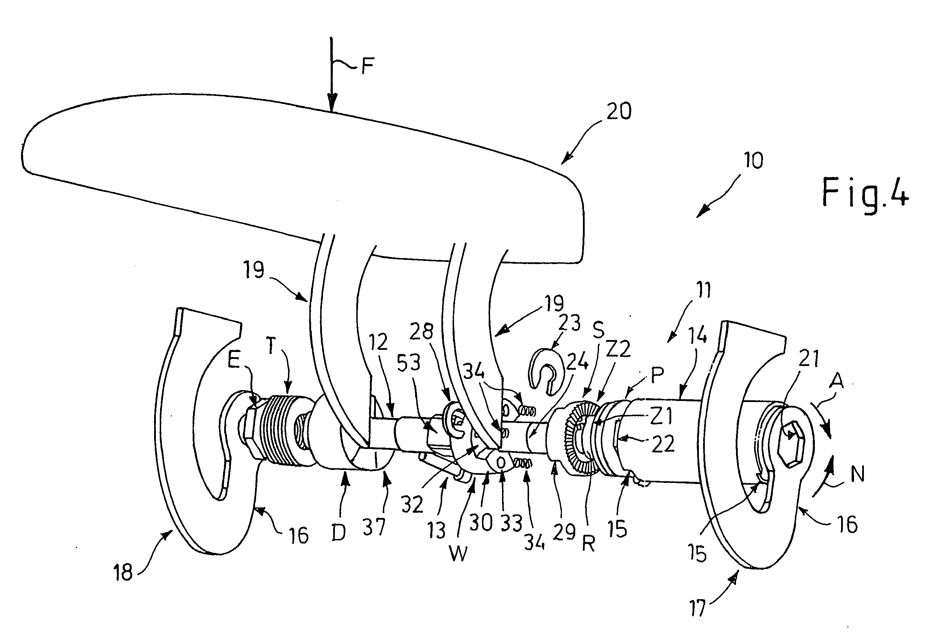

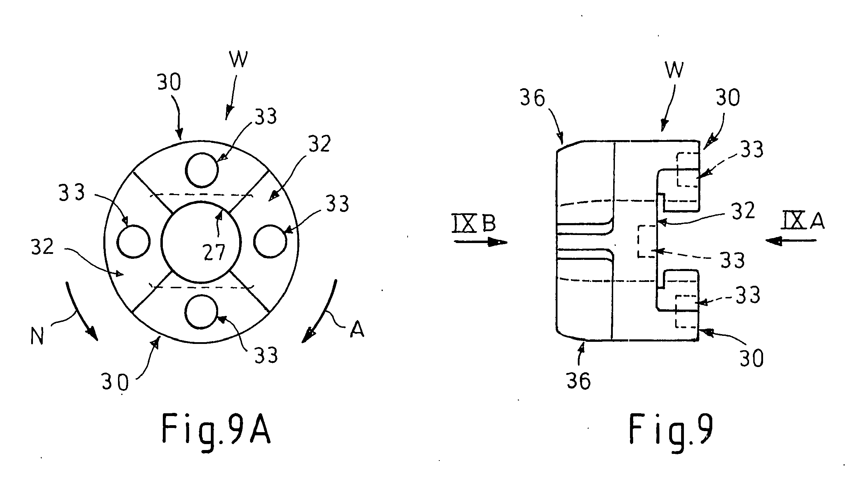

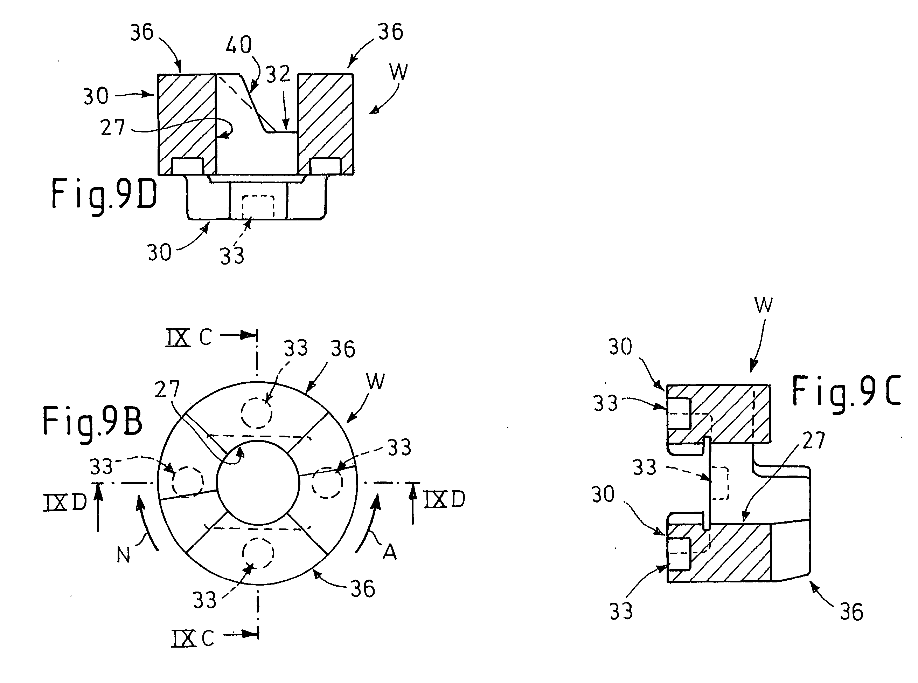

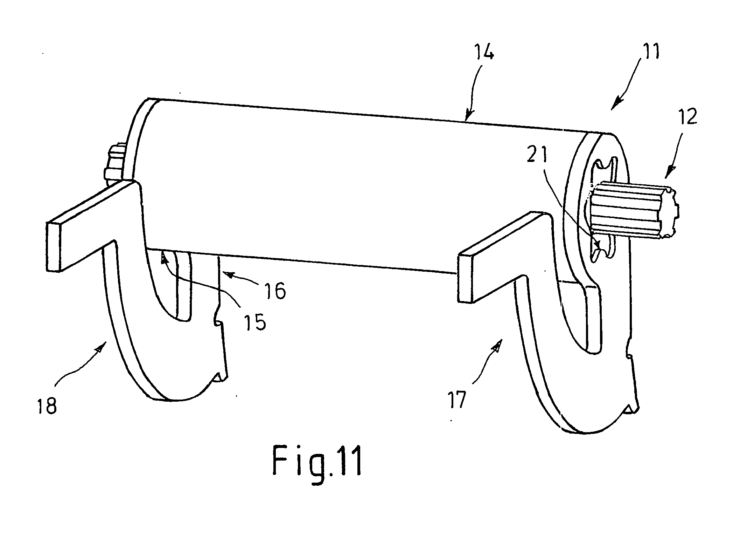

In der folgenden Zeichnungsbeschreibung sind sowohl bei dem Ausführungsbeispiel gemäß den Fig. 1-10C als auch bei dem Ausführungsbeispiel gemäß den Fig. 11-17A trotz baulicher Unterschiede analoge Bauelemente stets mit denselben Bezugsziffern bezeichnet.

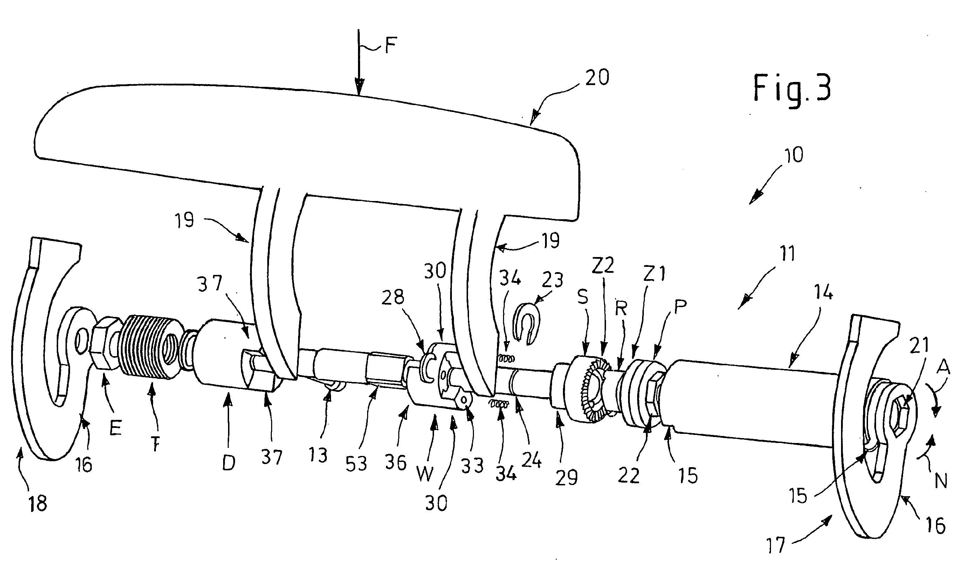

Die Gesamtheit einer Armlehne (s. Fig. 3 bis 5, Fig. 13) ist mit der Bezugsziffer 10 versehen.

Das tragende Element des mechanischen Bereichs 11 der Armlehne 10 ist eine raumfeste Achse 12, welche mittels Halter 13 in nicht näher beschriebener Weise fahrzeugseitig befestigt ist. Die Achse 12 hat bei der Ausführungsform gemäß den Fig. 11-17A ein Keilwellenprofil, d.h. ein sogenanntes Vielkeilwellenprofil.

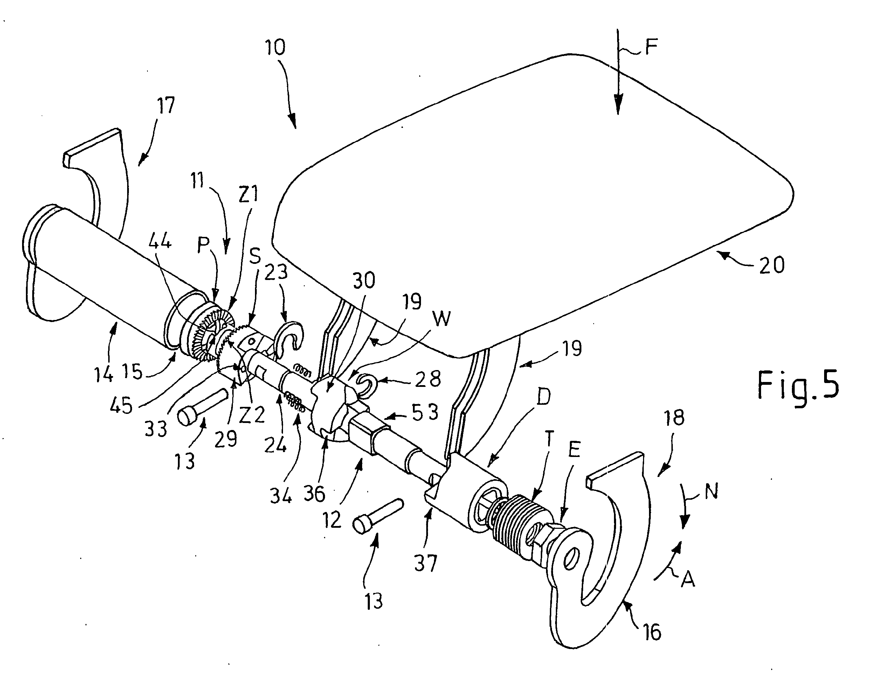

Eine Vielzahl der Bauteile des mechanischen Bereichs 11 ist von einem Hüllrohr 14 umgeben, welches beidendig mit je einer Ausklinkung 15 jeweils den geraden Bereich 16 der beiden etwa haarnadelförmig gekrümmten Armlehnentragarme 17, 18 formschlüssig übergreift. Auf diese Weise ist der in den Fig. 1-4 sowie Fig. 11 und 13 rechts bzw. der in Fig. 5 links dargestellte Tragarm 17 mit dem in den Fig. 1-4 sowie Fig. 11 und 13 links dargestellten bzw. mit dem in Fig. 5 rechts dargestellten Tragarm 18 zwangsweise drehverbunden.

Zwei im Querschnitt etwa U-förmige Hohlprofile 19, die von einer Armauflage 20 herabragen, werden in nicht dargestellter Weise über die beiden Tragarme 17, 18 geschoben und dort befestigt.

Da die auf die Armauflage 20 einwirkenden äußeren Kräfte F primär über den Tragarm 17 in den mechanischen Bereich 11 eingeleitet werden, steht der Tragarm 17 im folgenden stellvertretend zugleich für den Begriff "Armlehnenkörper" bzw. "schwenkbarer Armlehnenkörper".

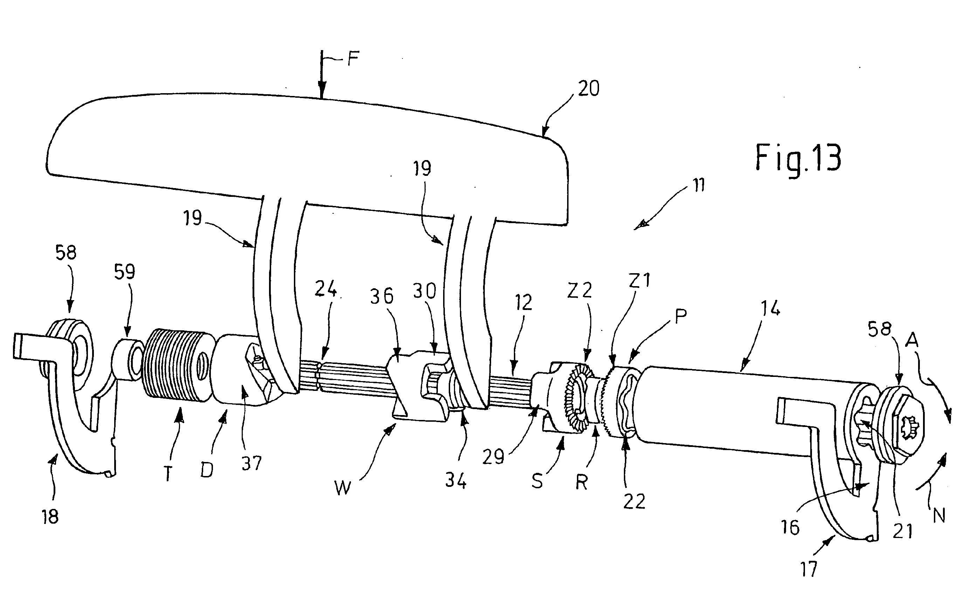

Wie insbesondere anhand von Fig. 3 vorstellbar ist, übergreift ein Innensechskant 21 des Tragarms 17 einen Außensechskant 22, der mit einem Primärteil P einstückig ist. Entsprechend den Fig. 11 und 13 ist anstelle des Innensechskants eine torxschraubenartige Aufnahme 21 und anstelle des Außensechskants ein torxschlüsselartiger Bund 22 am Primärteil P vorgesehen. Auch ist auf beiden Enden der Achse 12 je ein Abschlussteil 58 drehfest gehalten. Der Tragarm 18 ist mittels einer Buchse 59 auf der Achse 12 drehgelagert.

Das Primärteil P ist, ebenso wie ein Steuerring R, ein Sekundärteil S, ein Widerlagerteil W, ein Druckteil D, ein Tellerfederpaket T und eine Einstellmutter E, auf der Achse 12 koaxial zu dieser angeordnet. Die Einstellmutter E bzw. ein gleichwirkendes Bauteil ist in den Fig. 11-13 nicht gezeigt.

Zur Axialsicherung des Tragarms 17 befindet sich an dessen Außenseite ein Seegerring 23, welcher in einer Ringnut 24 der Achse 12 schnappverrastend gehalten ist.

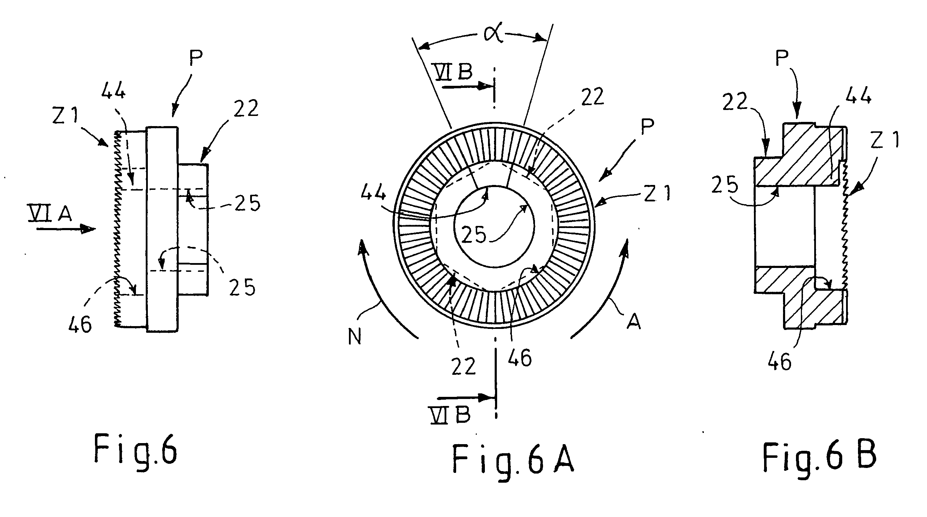

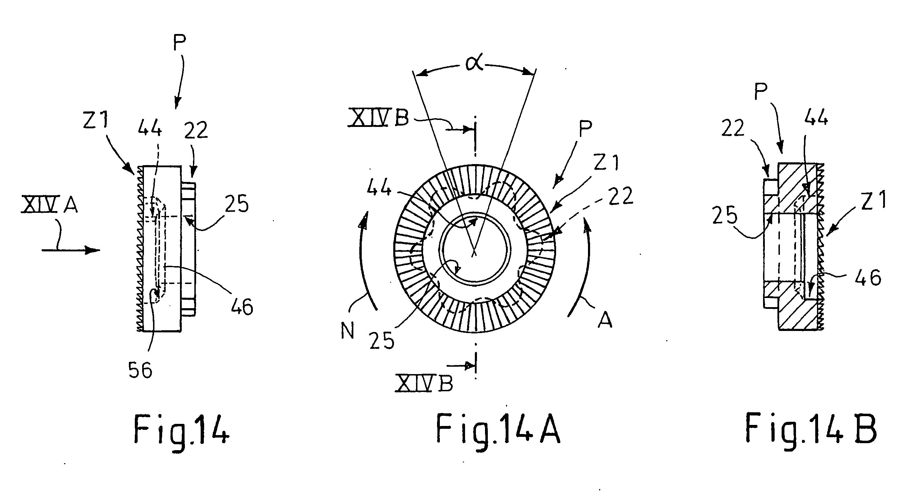

Das Primärteil P ist in den Fig. 6-6B sowie Fig. 14-14B näher dargestellt. Die Darstellung des Primärteils P gemäß den Fig. 6 und 14 entspricht dessen Einbaulage in den Fig. 3 sowie Fig. 12 und 13. Das Primärteil P weist eine Stirnverzahnung Z1 auf, welche der Hirth-Verzahnung einer Stirnzahnkupplung ähnelt, deren Zähne jedoch entsprechend einem Zahnrichtgesperre Sperrzähne mit je einer Gleitflanke und mit je einer steilen bzw. hinterschnittenen Sperrflanke bilden. Die Stirnverzahnung Z1 erstreckt sich ganzflächig über eine Kreisringfläche, deren Peripherie praktisch mit der Außenkontur des Primärteils P identisch ist, so dass die Stirnverzahnung Z1 bereits wegen dieser geometrischen Anordnung eine hinreichende Tragfähigkeit, und damit eine hinreichende Eignung, relativ große Dreh- bzw. Lastmomente aufzunehmen, besitzt.

Mit der Stirnverzahnung Z1 des Primärbauteils P wirkt eine eine analoge Verzahnungsgeometrie aufweisende Stirnverzahnung Z2 des Sekundärteils S zusammen.

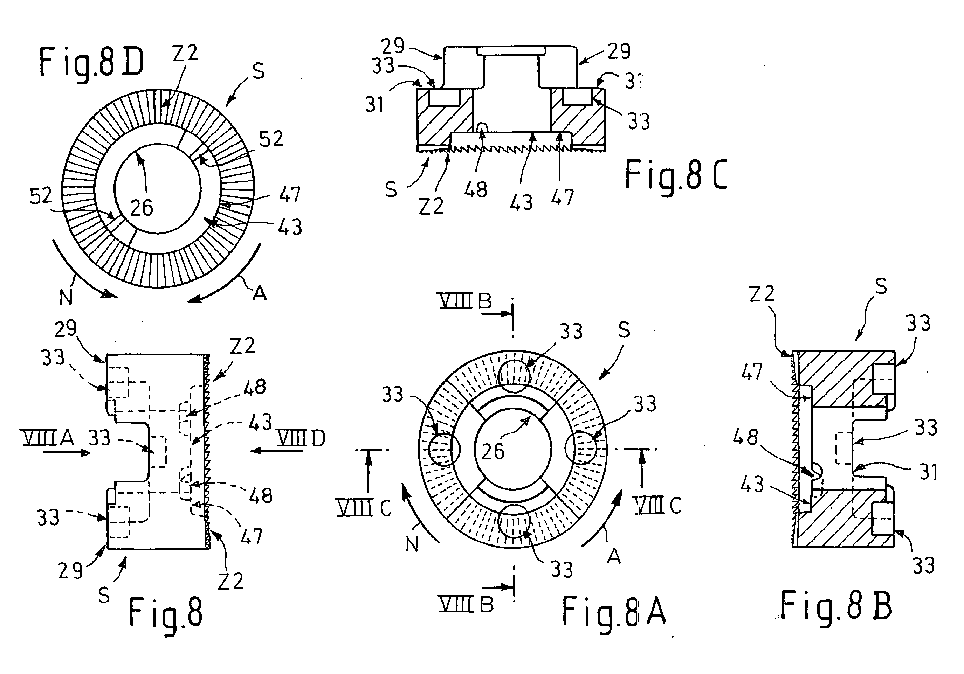

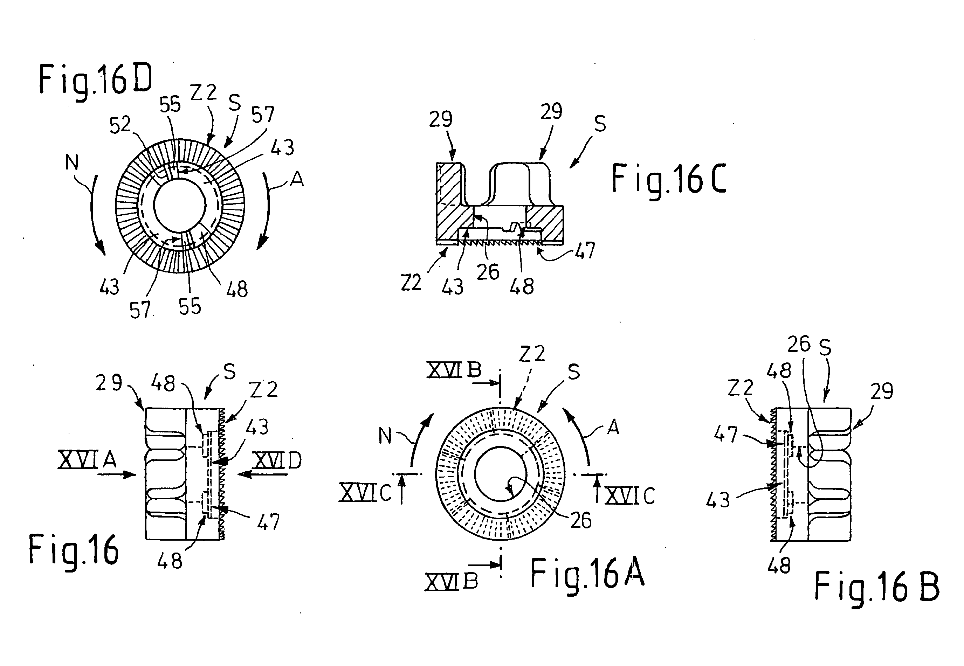

Die Fig. 8 und 16 zeigen das Sekundärteil S in seiner der Fig. 3 sowie den Fig. 12 und 13 entsprechenden Einbaulage. Die Stirnverzahnung Z2 des Sekundärteils S ist gegenüber der Stirnverzahnung Z1 des Primärteils P so beschaffen und so angeordnet, dass bei einem Aufwärtsschwenk des Tragarms 17 entsprechend dem Schwenkpfeil A (s. Fig. 3 und 13) die Sperrzähne der Stirnverzahnung Z1 des Primärteils P über die Gleitflanken der Sperrzähne der Stirnverzahnung Z2 des im normalen Betriebsfall undrehbar auf der Achse 12 gehaltenen Sekundärteils S hinweggleiten.

Falls sich aber die beiderseitigen Sperrzähne der Stirnverzahnungen Z1 und Z2 in Eingriff befinden und eine Kraft F (s. Fig. 3 und 13) von oben auf die Armauflage 20 drückt, wird ein Drehmoment in Richtung des Drehpfeils N eines Abwärtsschwenks in die Stirnverzahnung Z1 des Primärteils P eingeleitet. Dies hat zur Folge, dass sich die Sperrzähne der Stirnverzahnung Z1 in den Zahnlücken zwischen den Sperrzähnen des undrehbar gehaltenen Sekundärteils S verhaken, so dass ein Abwärtsschwenk in Drehrichtung N nicht erfolgen kann.

Wie vorerwähnt, ist das Sekundärteil S im normalen Betriebsfall undrehbar auf der Achse 12 gehalten, jedoch mit seiner glatten Zentralbohrung 26 auf der Achse 12 drehgelagert, ebenso wie das Primärteil P mit seiner glatten Zentralbohrung 25. Andere Verhältnisse gelten für das Sekundärteil S im Falle einer Überlast, wie im folgenden noch erläutert wird.

An seiner bezüglich der Einbaulage gemäß Fig. 3 und Fig. 13 dem Primärteil P abgewandten Stirnseite des Sekundärteils S ist das Widerlagerteil W angeordnet, welches mit seiner glatten Zentralbohrung 27 auf der Achse 12 gelagert, welches jedoch mittels eines Seegerringes 28 (axialer Sicherungsring) gegen Axialverschiebung auf der Achse 12 gesichert ist, welche dazu an ihrer Außenmantelfläche mit einer Ringnut 24 versehen ist.

Das Sekundärteil S und das Widerlagerteil W bilden jeweils zwei sich axial erstreckende und mit ihren freien Endbereichen gegeneinander gerichtete Kupplungsklauen 29, 30, welche eine hinsichtlich ihrer Axiallänge veränderbare drehfeste Verbindung zwischen dem axial verschieblichen Sekundärteil S und dem axial unverschieblich auf der Achse 12 gehaltenen Widerlagerteil W darstellen.

Jede Kupplungsklaue 29, 30 und jede zwischen den Füßen zweier benachbarter Kupplungsklauen 29, 29 bzw. 30, 30 angeordnete Vertiefung 31 des Sekundärteils S und 32 des Widerlagerteils W bildet ein axiales Sackloch 33 zur endseitigen Aufnahme von vier sich parallel zur Achse 12 erstreckenden umfangsverteilten Schraubendruckfedern 34.

Anstelle der vier Schaubendruckfedern 34 kann zwischen dem Sekundärteil S und dem Widerlagerteil W eine koaxial zu den beiden letztgenannten Bauteilen angeordnete einzige Schraubendruckfeder (s. Fig. 13, Pos. 34) vorgesehen sein, welche sich entsprechend einer nicht gezeigten Ausführungsform an Ringschultern der jeweiligen Außenmantelfläche sowohl des Sekundärteils S als auch des Widerlagerteils W abstützen kann.

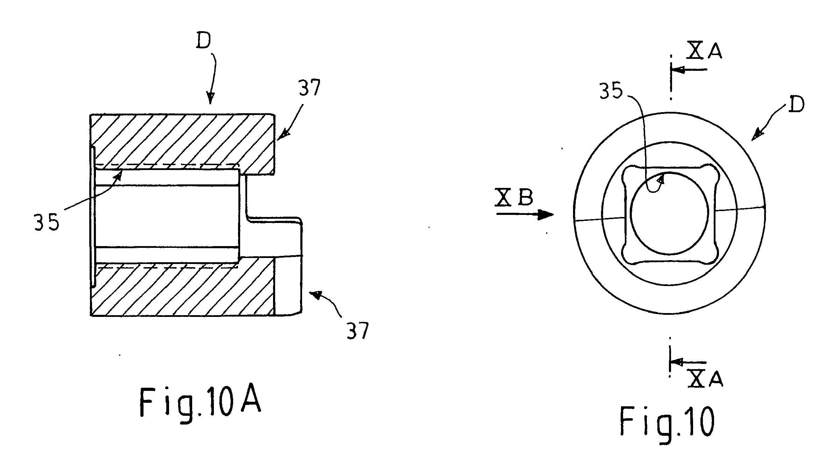

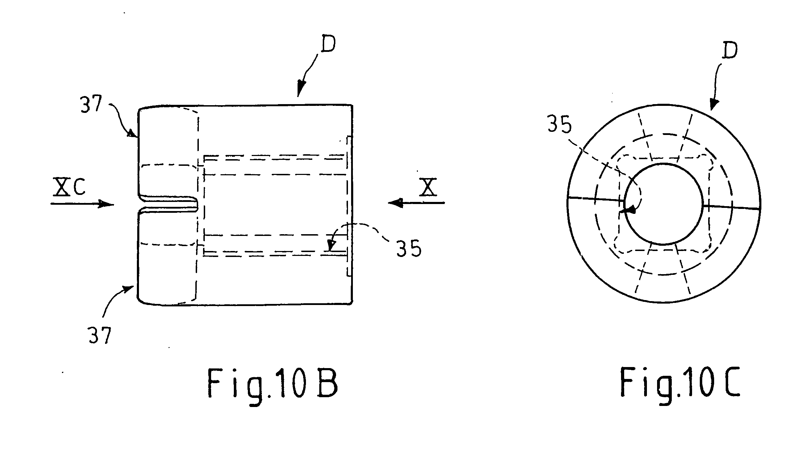

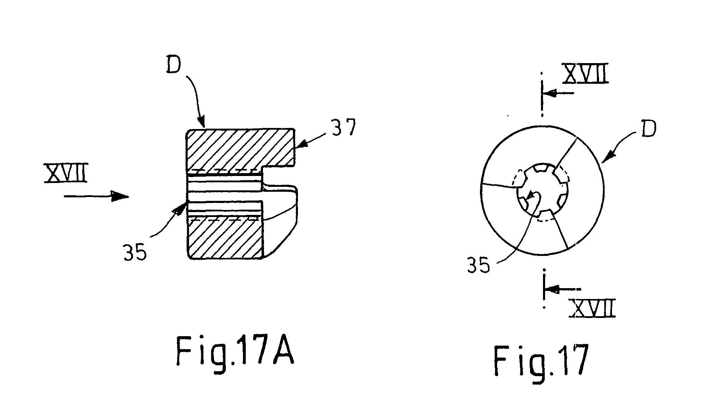

An der dem Sekundärteil S abgewandten Seite des Wderlagerteils W ist das Druckteil D angeordnet. Das Druckteil D (s. Fig. 10-10C) ist mit einem Innenvierkant 35 auf einem korrespondierenden Vierkantbereich 53 der Achse 12 axial verschieblich jedoch drehfest auf letzterer angeordnet. Bei der Ausführungsform entsprechend den Fig. 11-17A weist das Druckteil D (s. Fig. 17 und 17A) anstelle eines Innenvierkants eine dem Keilwellenprofil der Achse 12 korrespondierend profilierte zentrale Innenaufnahme 35 auf, so dass das Druckteil D zwar drehfest, jedoch axial verschieblich, auf der Achse 12 angeordnet ist.

Das Widerlagerteil W und das Druckteil D weisen jeweils zwei sich axial erstreckende und mit ihren freien Endbereichen gegeneinander gerichtete und ineinandergreifende kupplungsklauenartige Vorsprünge 36, 37 auf. Die kupplungsklauenartigen Vorsprünge 36 des Widerlagerteils W liegen mit sich axial und radial erstreckenden Anschlagflächen 38 an sich ebenfalls axial und radial erstreckenden Anschlagflächen 39 der beiden kupplungsklauenartigen Fortsätze 37 des Druckteils D an.

Außerdem liegen die beiden kupplungsklauenartigen Fortsätze 36 des Widerlagerteils W mit sich schräg zur Achse 12 erstreckenden schrägen Gleitflächen 40 an korrespondierend schrägen Gleitflächen 41 der beiden kupplungsklauenartigen Fortsätze 37 des Druckteils D an.

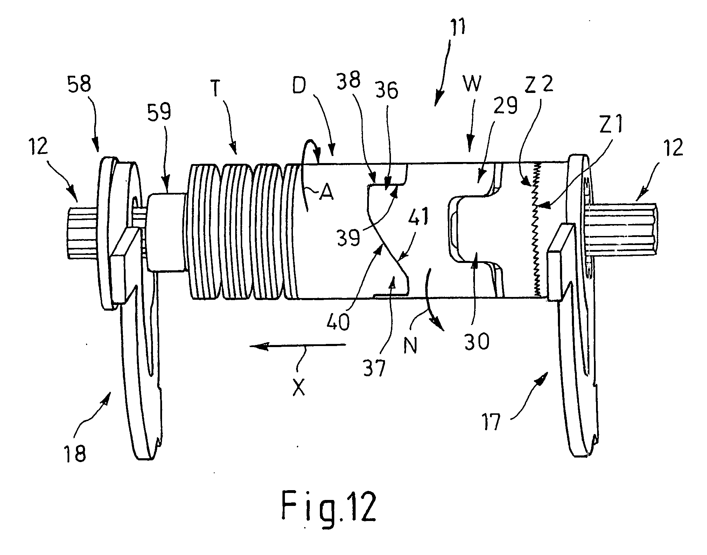

Auf der dem Widerlagerteil W abgewandten Stirnseite des Druckteils D ist ein Tellerfederpaket T angeordnet. Das Tellerfederpaket drückt das Druckteil D mit einer Federrückstellkraft gegen das auf der Achse 12 unverschiebliche Widerlagerteil W. Mittels der Einstellmutter E (gemäß den Fig. 12 und 13 zwar zumindest gleichwirkend vorhanden, jedoch nicht gezeigt), welche auf einem nicht dargestellten Außengewinde der Achse 12 sitzt, kann die Vorspannung des Tellerfederpakets T eingestellt und variiert werden.

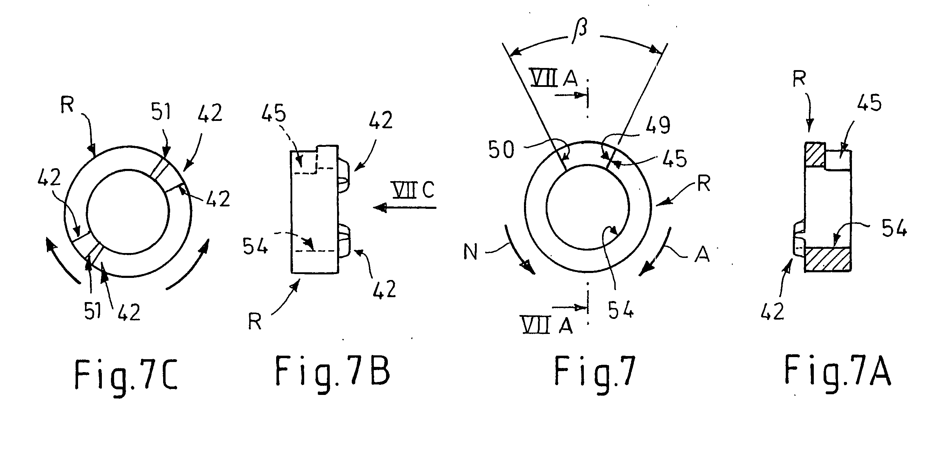

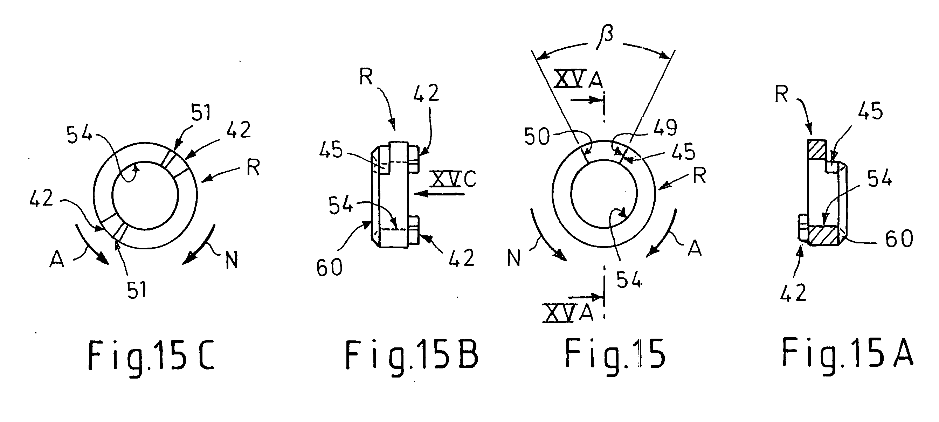

Eine besondere Funktion erfüllt der zwischen dem Primärteil P und dem Sekundärteil S angeordnete und mit seiner glatten Zentralbohrung 54 auf der Achse 12 gelagerte Steuerring R, welcher mit dem Primärteil P drehverbunden ist und welcher auf seiner dem Sekundärteil S zugewandten Stirnseite zwei Steuernocken 42 (s. Fig. 7-7C;Fig. 15-15C) bildet, welche mit einer Steuerbahn 43 des Sekundärteils S zusammenwirken.

Das Primärteil P (s. Fig. 6-7B und Fig. 14-14B) weist einen zum Sekundärteil S hinweisenden Mitnehmernocken 44 auf, welcher in eine zum Primärteil P weisende Mitnahmeaussparung 45 des Steuerringes R eingreift.

Das Primärteil P und das Sekundärteil S bilden ihre Stirnverzahnungen Z1 und Z2 jeweils auf einer radialen Kreisringfläche. Die Außenkontur jeder Kreisringfläche bildet dabei zugleich im wesentlichen die Außenkontur der Querschnittsfläche von Primärteil P und Sekundärteil S.

Jede Stirnverzahnung Z1, Z2 erstreckt sich gleichflächig jeweils über den gesamten Umfang von Primärteil P und Sekundärteil S.

Das Primärteil P und das Sekundärteil S bilden im Anschluß an die jeweilige Stirnverzahnung Z1 und Z2 radial innen eine im wesentlichen kreiszylindrische Ausnehmung 46, 47. Die offenen Seiten der beiden kreiszylindrischen Ausnehmungen 46, 47 sind einander zugewandt und bilden so eine gemeinsame Ausnehmung zur Aufnahme des Steuerringes R. Für gewisse Anwendungsfälle kann es zweckmäßig sein, dass zwischen der Ausnehmung 46 des Primärteils P und dem einen korrespondierenden Bereich des Steuerrings R eine größere Reibung herrscht als zwischen der Ausnehmung 47 des Sekundärteils S und dem anderen korrespondierenden Bereich des Steuerrings R. Deswegen bildet die Ausnehmung 46 des Primärteils P eine kreisringartige V-förmige Vertiefung 56 und der Steuerring R einen kreisringartigen V-förmigen Vorsprung 60.

Die Mitnahmeaussparung 45 des Steuerringes R weist mit ihrem Umfangswinkel β eine größere Umfangserstreckung auf als der Mitnehmernocken 44 des Primärteils P mit seinem Umfangswinkel α. So kann beispielsweise der Winkel β = 60° und der Winkel α = etwa 45° betragen, so dass dem Mitnehmernocken 44 für einen Vorlauf bzw. für einen Rücklauf eine Umfangswinkeldifferenz von etwa 15° zur Verfügung steht.

Den beiden Steuernocken 42 des Steuerringes R ist in der Steuerbahn 43 des Sekundärteils S je eine dort eingelassene Steueraussparung 48 zugeordnet. Die Steuerbahn 43 an sich stellt eine sich radial zur Achse 12 erstreckende ebene Kreisringfläche dar, welche als radiale Stufenfläche Teil der den Steuerring R aufnehmenden kreiszylindrischen Ausnehmung 47 ist.

Die Funktion der in den Zeichnungen dargestellten Armlehne ist folgende:

Wenn sich der Armlehnenkörper 17 in seiner untersten Stellung befindet, liegt der Mitnehmernocken 44 an der zweiten Anschlagfläche 50 der Mitnahmeaussparung 45 des Steuerringes R an. Weil der Umfangswinkel β der Mitnahmeaussparung 45 um z.B. 15° größer ist als der Umfangswinkel α, über den sich der Mitnehmernocken 44 erstreckt, steht dem mit dem Armlehnenkörper 17 drehverbundenen Primärteil P ein umfänglicher Bewegungsraum von 15° zur Verfügung. Entlang dieses umfänglichen Bewegungsraums kann der Armlehnenkörper über z.B. vier Zähne der drehfest gehaltenen Stirnverzahnung Z2 des Sekundärteils S hinweg Zahnlücke für Zahnlücke aufwärts geschwenkt werden.

Ein unmittelbarer Abwärtsschwenk aus einer dieser vier Positionen ist nicht möglich, weil sich die Stirnverzahnungen Z1 und Z2 im sperrenden Eingriff befinden.

Der begrenzte Aufwärtsschwenk um 15° ist ohne weiteres möglich, weil die Sperrzähne der Stirnverzahnung Z1 des Primärteils P ungehindert über die Gleitflanken der Sperrzähne der undrehbar gehaltenen Stirnverzahnung Z2 des Sekundärteils S hinweggleiten können.

Auf diese Weise wäre es zwar grundsätzlich möglich, den Aufwärtsschwenk bis zur aufrechten Position des Armlehnenkörpers 17 weiterzuführen, jedoch würden die damit einhergehenden, zwischen den beiden Stirnverzahnungen Z1 und Z2 entstehenden Rastgeräusche als unangenehm empfunden. Um diese unangenehme Geräuschentwicklung zu vermeiden, hat die Erfindung folgenden Weg beschritten:

Sobald der Mitnehmernocken 44 gegen die erste Anschlagfläche 49 der Mitnahmeaussparung 45 des Steuerringes R stößt und der Aufwärtsschwenk anschließend in Drehrichtung A weitergeführt wird, gleiten die beiden Steuernocken 42 mit ihren Schrägflächen 51 voran über die Schrägflächen 52 der sekundärteilseitigen Steueraussparungen 48 hinweg und aus letzteren heraus, wie anhand der mit A bezeichneten Drehrichtungspfeile insbesondere anhand der Fig. 7, 7C sowie Fig. 8D und auch anhand von 15, 15C sowie 16D vorstellbar ist.

Hierdurch wird das Sekundärteil S entgegen der Rückstellkraft der Schraubendruckfedern 34 vom Primärteil P weggedrückt, so dass die Stirnverzahnungen Z1, Z2 außer Eingriff geraten und der Tragarm 17 bis zu seiner aufrechten Position geräuschlos hochgeschwenkt werden kann. Bei diesem Aufwärtsschwenk bewegen sich die beiden Steuernocken 42 über die ebene Steuerbahn 43.

Wenn nun, beginnend mit der aufrechten Position des Armlehnenkörpers 17, der Abwärtsschwenk eingeleitet werden soll, dreht sich der Mitnehmernocken 44 in Drehrichtung N von der ersten Anschlagfläche 49 zurück in seine vorbeschriebene Ausgangsposition an der Anschlagfläche 50.

Sodann bewegen sich die Steuernocken 42 wiederum über die ebene Steuerbahn 43 zurück in Drehrichtung N (s. Fig. 7C, 8D sowie Fig. 15C, 16D) und gleiten schließlich wieder zurück in die Steueraussparungen 48 der sekundärteilseitigen Steuerbahn 43, womit sich der Armlehnenkörper 17 wiederum in seiner vorbeschriebenen tiefsten Ausgangsstellung befindet, und die Stirnverzahnungen Z1 und Z2 in ihre Eingriffsstellung zurückgeführt sind.

Um in jedem Falle sicherzustellen, dass sich beim Abwärtsschwenk in Drehrichtung N der Mitnehmernocken 44 von der ersten Anschlagfläche 49 zurück in seine vorgeschriebene Ausgangsposition an der Anschlagfläche 50 bewegt, um wiederum bei dem in Aufwärtsrichtung A gerichteten nachfolgenden Einstellhub einen Vorlauf von 15° zu gewährleisten, sieht die Erfindung entsprechend der Ausführungsform gemäß den Fig. 11-17A folgendes vor:

In Aufwärtsdrehrichtung A jeweils unmittelbar neben jeder sekundärteilseitigen Steueraussparung 48 ragt aus der ebenen Steuerbahn 43 in Axialrichtung x zum Steuerring R hin eine Erhebung als Schaltschwelle 55 vor.

Sobald der Mitnehmernocken 44 gegen die erste Anschlagfläche 49 der Mitnahmeaussparung 45 des Steuerringes R stößt und der Aufwärtsschwenk anschließend in Drehrichtung A weitergeführt wird, gleiten wiederum die beiden Steuernocken 42 mit ihren Schrägflächen 51 voran über die Schrägflächen 52 der sekundärteilseitigen Steueraussparungen 48 hinweg sowie aus letzteren heraus und, wie anhand von Fig. 16D vorstellbar ist, auf die Schaltschwellen 55 hinauf und über diese hinweg. Dabei wird wiederum das Sekundärteil S entgegen einer Federrückstellkraft, und zwar gegen die Rückstellkraft der einzigen Schraubendruckfeder 34, vom Primärteil P weggedrückt, so dass die Stirnverzahnungen Z1, Z2 außer Eingriff geraten und der Tragarm 17 bis zu seiner aufrechten Position geräuschlos hochgeschwenkt werden kann. Bei diesem Aufwärtsschwenk in Richtung A bewegen sich die beiden Steuernocken 42 über die ebene Steuerbahn 43. Wenn nun, beginnend mit der gänzlich angehobenen Position des Tragarms 17, die durch einen externen Anschlag markiert sein kann, wiederum der Abwärtsschwenk in Richtung N eingeleitet werden soll, dreht sich der Mitnehmer-nocken 44 in Richtung N von der ersten Anschlagfläche 49 zurück in seine vorbeschriebene Ausgangsposition an der Anschlagfläche 50. Damit dieses Zurückdrehen erfolgen kann, bedarf es einer Relativbewegung zwischen mit Primärteil P und dem Steuerring R, welche beim Ausführungsbeispiel gemäß den Fig. 1-10C auf Haftreibung basiert, welche den Steuerring R bezüglich der sekundärteilseitigen Steuerbahn 43 zurückhält. Dieses Zurückhalten tritt indessen bei der Schaltschwelle 55 gemäß Fig. 16D in jedem Fall ein, weil die Steuernocken 42 beim Abwärtshub in Richtung N jeweils gegen die Schaltkante 57 der Schaltschwelle 55 anlaufen und somit eine Anlage des primärteilseitigen Mitnehmernockens 44 an der zweiten Anschlagfläche 50 des Steuerringes R sicherstellen.

Für den Fall, dass sich der Armlehnenkörper 17 in seiner tiefsten Ausgangsstellung befindet und eine Überlast in Richtung F auf den Armlehnenkörper 17 einwirkt und versucht den Armlehnenkörper 17 in Drehrichtung N abwärts zu schwenken, befinden sich die beiden Stirnverzahnungen Z1 und Z2 in sperrendem Eingriff.

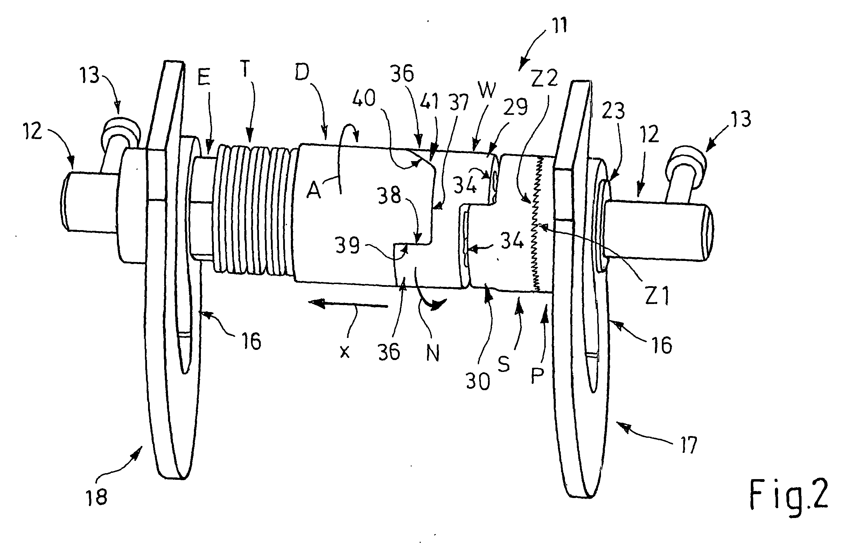

Über die Drehverbindung mittels der Kupplungsklauen 29, 30 des Sekundärteils S und des Widerlagerteils W wird das durch die Überlast hervorgerufene Drehmoment auf das Widerlagerteil W übertragen, so dass das Widerlagerteil W in Richtung N (s. Fig. 2 und 12) dreht und die schrägen Gleitflächen 40 der kupplungsklauenartigen Fortsätze 36 des Widerlagerteils W die schrägen Gleitflächen 41 der kupplungsklauenartigen Fortsätze 37 des Druckteils D in Axialrichtung x zurückdrängen. Auf diese Weise kann das unter der Überlast in Drehrichtung N weiterdrehende Widerlagerteil W bezüglich des raumfest gehaltenen Druckteils D eine Ausweichdrehung durchführen und dadurch die Armlehne 10 entlasten.

## Patentansprüche

1. Armlehne, wie Mittelarmlehne (10), mit einem um eine horizontale Achse (12) zwischen einer angehobenen und einer abgesenkten Position einstellbar schwenkbaren Armlehnenkörper (17), welchem eine Überlastsicherung (W, D, T, E) zugeordnet ist, die bei abgesenkter Position des Armlehnenkörpers (17) bei Auftreten einer Überlast einen Abwärtsschwenk (N) des Armlehnenkörpers (17) freigibt, **dadurch gekennzeichnet, dass** zur Bildung der Überlastsicherung (W, D, T, E) auf der Achse (12) der Armlehne (10) ein mit seiner einen Seite mit dem Armlehnenkörper (17) drehverbindbares Widerlagerteil (W) drehgelagert und auf der Achse (12) axial gesichert ist, an dessen anderer Seite sich ein auf der Achse (12) drehfest und axial verschieblich angeordnetes Druckteil (D) mit der Rückstellkraft mindestens eines Federelements (T) abstützt, wobei das Widerlagerteil (W) und das Druckteil (D) jeweils zwei sich axial erstreckende und mit ihren freien Endbereichen gegeneinander gerichtete und ineinandergreifende kupplungsklauenartige Vorsprünge (36, 37) aufweisen, und wobei die kupplungsklauenartigen Vorsprünge (36, 37) des Widerlagerteils (W) und des Druckteils (D) bezüglich eines Aufwärtsschwenks (A) des Armlehnenkörpers (17) mit zwei sich axial und radial erstreckenden Anschlagflächen (38, 39) und bezüglich eines Abwärtsschwenks (A) des Armlehnenkörpers (17) mit sich schräg zur Achse (12) erstreckenden schrägen Gleitflächen (40, 41) aneinanderliegen.

2. Armlehne nach Anspruch 1, **dadurch gekennzeichnet**, wobei die Achse (12) das Druckteil (D) auf einem unrunden zylindrischen Achsbereich (53) axial verschieblich aufnimmt und wobei die Querschnittsform der unrunden zylindrischen Aufnahme (35) des Druckteils (D) der Querschnittsform des unrunden zylindrischen Achsbereichs (53) entspricht.

3. Armlehne nach Anspruch 2, wobei der unrunde zylindrische Achsbereichs (53) und die unrunde zylindrische Aufnahme (35) des Druckteils (D), von einem Vierkantquerschnitt gebildet sind.

4. Armlehne nach Anspruch 2 oder nach Anspruch 3, wobei dass die das Druckteil (D) in Richtung auf das Widerlagerteil (W) beaufschlagende Federrückstellkraft von einem Tellerfederpaket (T) gebildet ist.

5. Armlehne nach Anspruch 4, wobei die Federrückstellkraft des Tellerfederpakets (T) mittels einer Einstellmutter (E) einstell- und veränderbar ist, die auf einem dem Druckteil (D) abgewandten Außengewinde der Achse (12) sitzt.

6. Armlehne nach einem der Ansprüche 1 bis 5, wobei das Widerlagerteil (W) über ein Sekundärteil (S) eines Zahnrichtgesperres (P, S) mit dem Armlehnenkörper (17) in dessen Abwärtsdrehrichtung (N) drehverbunden ist.

7. Armlehne nach Anspruch 6, wobei das nur beim Abwärtsschwenk des Armlehnenkörpers (17) sperrende Zahnrichtgesperre (P, S) ein mit dem Armlehnenkörper (17) drehverbundenes, um die Achse (12) drehbares Primärteil (P) aufweist, mit welchem das bezüglich der Achse (12) zumindest begrenzt drehfest gehaltene Sekundärteil (S) kooperiert, wobei dem Zahnrichtgesperre (P, S) eine Steuereinrichtung (R, 43) zugeordnet ist, welche bei angehobener Position und beginnendem Abwärtsschwenk des Armlehnenkörpers (17) Primärteil (P) und Sekundärteil (S) voneinander trennt und im Bereich der abgesenkten Position wieder in Eingriff miteinander versetzt, wobei Primärteil (P) und Sekundärteil (S) einander zugewandte, zur Achse (12) koaxiale, etwa nach Art einer Stirnzahnkupplung angeordnete Stirnverzahnungen (Z1, Z2) bilden und das Sekundärteil axial beweglich ist, und wobei die Primärteil (P) und Sekundärteil (S) in oder außer Eingriff versetzende Steuereinrichtung (R, 43) mindestens einen mit dem Primärteil (P) umlaufenden Steuernocken (42) oder mindestens eine mit dem Primärteil (P) umlaufende Steuerbahn und, dazu korrelierend, mindestens eine mit dem Sekundärteil (S) feste Steuerbahn (43) oder mindestens einen mit dem Sekundärteil (S) festen Steuernocken bildet.

8. Armlehne nach Anspruch 7, wobei zwischen dem Primärteil (P) und dem Sekundärteil (S) ein mit dem Primärteil (P) drehverbundener Steuerring (R) angeordnet ist, welcher auf seiner dem Sekundärteil (S) zugewandten Seite den Steuernocken (42) oder die Steuerbahn bildet.

9. Armlehne nach Anspruch 8, wobei das Primärteil (P) einen zum Sekundärteil (S) hin weisenden Mitnehmernocken (44) aufweist, welcher in eine zum Primärteil (P) weisende Mitnahmeaussparung (45) des Steuerringes (R) eingreift, der an seiner dem Sekundärteil (S) zugewandten Seite mindestens einen, insbesondere zwei Steuernocken (42) bildet, welcher/welche mit der mit dem Sekundärteil (S) festen Steuerbahn (43) kooperiert/kooperieren.

10. Armlehne nach Anspruch 8 oder nach Anspruch 9, wobei Primärteil (P) und Sekundärteil (S) jeweils eine die Stirnverzahnung (Z1, Z2) tragende radiale Kreisringfläche bilden.

11. Armlehne nach Anspruch 10, wobei die Außenkontur der Kreisringfläche zugleich die Außenkontur der Querschnittsfläche von Primärteil (P) und/oder Sekundärteil (S) bildet.

12. Armlehne nach Anspruch 10 oder nach Anspruch 11, wobei sich die Stirnverzahnung (Z1, Z2) gleichflächig jeweils über den gesamten Umfang von Primärteil (P) und Sekundärteil (S) erstreckt.

13. Armlehne nach Anspruch 11 oder nach Anspruch 12, wobei Primärteil (P) und Sekundärteil (S) jeweils im Anschluß an die Kreisringfläche (bei Z1, bei Z2) radial innen eine im wesentlichen kreiszylindrische Ausnehmung (46, 47) bilden, dass die offenen Seiten beider kreiszylindrischer Ausnehmungen (46, 47) einander zugewandt sind und dass die beiden kreiszylindrischen Ausnehmungen (46, 47) gemeinsam den Steuerring (R) aufnehmen.

14. Armlehne nach einem der Ansprüche 7 bis 13, wobei das Primärteil (P) auf der Achse (12) axial fest und das Sekundärteil (S) auf der Achse (12) axial beweglich angeordnet ist.

15. Armlehne nach Anspruch 14, wobei das Sekundärteil (S) entgegen Federrückstellkraft vom Primärteil (P) weg axial bewegbar ist.

16. Armlehne nach einem der Ansprüche 9 bis 15, wobei die Mitnahmeaussparung (45) des Steuerringes (R) eine größere Umfangserstreckung als der Mitnehmernocken (44) des Primärteils (P) aufweist, derart, dass das Primärteil (P) sowohl bei abgesenkter Position und beginnendem Aufwärtsschwenk als auch bei angehobener Position und beginnendem Abwärtsschwenk des Armlehnenkörpers (17) einen Vorlauf bis zum Anschlag des Mitnehmernockens (44) an der jeweiligen ersten (49) oder zweiten (50) Anschlagfläche der Mitnahmeaussparung (46) erhält.

17. Armlehne nach einem der Ansprüche 9 bis 16, wobei dem mindestens einen Steuernocken (42) eine in der dem Primärteil (P) zugewandten Steuerbahn (43) des Sekundärteils (S) eingelassene Steueraussparung (48) zugeordnet ist.

18. Armlehne nach Anspruch 17, wobei die Steuerbahn (43) eine sich radial zur Achse (12) erstreckende ebene Kreisringfläche bildet.

19. Armlehne nach Anspruch 18, wobei eine kreisringförmige Stufenfläche der den Steuerring (R) aufnehmenden kreiszylindrischen Ausnehmung (47) des Sekundärteils (S) die eine ebene Kreisringfläche bildende Steuerbahn (43) darstellt.

20. Armlehne nach einem der Ansprüche 17 bis 19, wobei der mindestens eine Steuernocken (42) des Steuerringes (R) aus der Steueraussparung (48) heraus und auf die ebene Steuerbahn (43) hinübergleitet, sobald der Mitnehmernocken (44) des Primärteils (P) beim Aufwärtsschwenk gegen die erste Anschlagfläche (48) der Mitnahmeaussparung (45) des Steuerringes (R) anläuft, und dass der mindestens eine Steuernocken (42) bei sich fortsetzendem Aufwärtsschwenk bis zur angehobenen Position des Armlehnenkörpers (17) auf der kreisringförmigen Steuerbahn (43) verbleibt.

21. Armlehne nach einem der Ansprüche 15 bis 20, wobei auf der seiner Stirnverzahnung Z2) abgewandten Seite des Sekundärteils (S) ein auf der Achse (12) gegen Axialverschiebung gesichertes Widerlagerteil (W) angeordnet ist, wobei das Widerlagerteil (W) zumindest begrenzt drehfest auf der Achse (12) angeordnet ist, und wobei Sekundärteil (S) und Widerlagerteil (W) drehfest miteinander gekuppelt bzw. verbunden sind.

22. Armlehne nach Anspruch 21, wobei zwischen dem Sekundärteil (S) und dem Widerlagerteil (W) mindestens eine Druckfeder (34) angeordnet ist.

23. Armlehne nach Anspruch 21 oder nach Anspruch 22, wobei das Sekundärteil (S) und das Widerlagerteil (W) jeweils zwei sich axial erstreckende und mit ihren freien Endbereichen gegeneinander gerichtete und ineinandergreifende Kupplungsklauen (29, 30) bilden, welche die drehfeste Verbindung zwischen dem axial verschieblichen Sekundärteil (S) und dem auf der Achse (12) drehgelagerten und axial gesicherten Widerlagerteil (W) darstellen.

24. Armlehne nach Anspruch 23, wobei jede Kupplungsklaue (29, 30) und jede zwischen den Füßen zweier benachbarter Kupplungsklauen (29, 29; 30, 30) angeordnete Vertiefung (31) des Sekundärteils (S) und (32) des Widerlagerteils (W) je ein Sackloch (33) zur jeweils beidendigen Aufnahme von vier sich parallel zur Achse (12) erstreckenden umfangsverteilten Schraubendruckfedern (34) bildet.

25. Armlehne nach einem der Ansprüche 21 bis 24, wobei das Widerlagerteil Bestandteil einer Überlastsicherung ist, welche einen Abwärtsschwenk des in seiner abgesenkten Position befindlichen Armlehnenkörpers freigibt.

26. Armlehne nach den Ansprüchen 1 bis 25, wobei ein Hüllrohr (14) das Zahnrichtgesperre (P, S), die Steuereinrichtung (R, 43) und die Überlastsicherung (W, D, T, E) koaxial umgreift.

27. Armlehne nach Anspruch 26, wobei das Hüllrohr (14) eine drehfeste Verbindung zwischen zwei Endbereichen (17, 18) des Armlehnenkörpers bildet.

28. Armlehne nach einem der Ansprüche 1 bis 27, **dadurch gekennzeichnet, dass** die Achse (12) auf gesamter axialer Länge ein Keilwellenprofil aufweist, wobei auf der Achse (12) das Widerlagerteil (W) mit einer glatten zentralen Durchgangsbohrung (27) drehbar gelagert ist, während das Druckteil (D) mittels einer entsprechend dem Keilwellenprofil profilierten zentralen Aufnahme (35) drehfest auf der Achse (12) angeordnet ist.

29. Armlehne nach Anspruch 28, **dadurch gekennzeichnet, dass** die Achse (12) mindestens eine an ihrem Umfang angeordnete Aufnahme, wie z.B. eine Ringnut (24) zur Halterung eines axialen Sicherungselements, wie z.B. eines Seegerringes (28), aufweist.

## Claims

1. Armrest, such as a centre armrest (10), comprising an armrest body (17), which is pivotable about a horizontal axle (12) adjustably between a raised and a lowered position and associated with which is an overload protection device (W, D, T, E), which, when the armrest body (17) is in the lowered position, in the event of an overload enables a downward swivel (N) of the armrest body (17), **characterized in that** in order to form the overload protection device (W, D, T, E) on the axle (12) of the armrest (10) an abutment part (W) is rotatably mounted and axially locked on the axle (12), one side of the abutment part being rotatably connectable to the armrest body (17) and there being supported against the other side of the abutment part with the restoring force of at least one spring element (T) a thrust part (D), which is disposed in a rotationally fixed and axially displaceable manner on the axle (12), wherein the abutment part (W) and the thrust part (D) each have two axially extending, intermeshing clutch-pawl-like projections (36, 37), which are oriented with their free end regions towards one another, and wherein the clutch-pawl-like projections (36, 37) of the abutment part (W) and the thrust part (D) are in mutual contact, with regard to an upward swivel (A) of the armrest body (17), by means of two axially and radially extending stop faces (38, 39) and, with regard to a downward swivel (A)of the armrest body (17), by means of oblique sliding faces (40, 41) extending obliquely relative to the axle (12).

2. Armrest according to claim 1, **characterized in**, wherein the axle (12) receives the thrust part (D) in an axially displaceable manner on a non-circular cylindrical axle region (53) and wherein the cross-sectional shape of the non-circular cylindrical receiver (35) of the thrust part (D) corresponds to the cross-sectional shape of the non-circular cylindrical axle region (53).

3. Armrest according to claim 2, wherein the non-circular cylindrical axle region (53) and the non-circular cylindrical receiver (35) of the thrust part (D), are formed by a square cross section.

4. Armrest according to claim 2 or according to claim 3, wherein that the spring restoring force that loads the thrust part (D) in the direction of the abutment part (W) is formed by a cup-spring assembly (T).

5. Armrest according to claim 4, wherein the spring restoring force of the cup-spring assembly (T) is adjustable and variable by means of a setting nut (E), which is seated on an external thread of the axle (12) that is remote from the thrust part (D).

6. Armrest according to one of claims 1 to 5, wherein the abutment part (W) is rotatably connected by a secondary part (S) of a ratchet-and-pawl locking mechanism (P, S) to the armrest body (17) in the downward direction of rotation (N) thereof.

7. Armrest according to claim 6, wherein the ratchet-and-pawl locking mechanism (P, S) that locks only during the downward swivel of the armrest body (17) comprises a primary part (P), which is rotatably connected to the armrest body (17) and is rotatable about the axle (12) and with which the secondary part (S) cooperates, which is held rotationally fixed at least to a limited extent relative to the axle (12), wherein there is associated with the ratchet-and-pawl locking mechanism (P, S) a control device (R, 43), which in a raised position and at the start of a downward swivel of the armrest body (17) separates primary part (P) and secondary part (S) from one another and in the region of the lowered position returns them to a state of mutual engagement, wherein primary part (P) and secondary part (S) form mutually opposing spur-gear units (Z1, Z2), which are coaxial with the axle (12) and disposed approximately in the manner of a spur-tooth clutch, and the secondary part (S) is axially movable, and wherein the control device (R, 43) that sets primary part (P) and secondary part (S) into or out of a state of engagement forms at least one radial cam (42) rotating with the primary part (P) or at least one control path rotating with the primary part (P) and, correlating thereto, at least one control path (43) fixed to the secondary part (S) or at least one radial cam fixed to the secondary part (S).

8. Armrest according to claim 7, wherein disposed between the primary part (P) and the secondary part (S) is a control ring (R), which is rotatably connected to the primary part (P) and which at its side facing the secondary part (S) forms the radial cam (42) or the control path.

9. Armrest according to claim 8, wherein the primary part (P) has a driver cam (44), which is directed towards the secondary part (S) and engages into a driving cutout (45), facing the primary part (P), of the control ring (R), which on its side facing the secondary part (S) forms at least one, in particular two radial cams (42), which cooperates/cooperate with control path (43) fixed to the secondary part (S).

10. Armrest according to claim 8 or according to claim 9, wherein primary part (P) and secondary part (S) each form a radial annular surface that carries the spur-gear unit (Z1, Z2).

11. Armrest according to claim 10, wherein the external contour of the annular surface simultaneously forms the external contour of the cross-sectional area of primary part (P) and/or secondary part (S).

12. Armrest according to claim 10 or according to claim 11, wherein the spur-gear units (Z1, Z2) extend with an identical surface over the entire circumference of primary part (P) and secondary part (S) respectively.

13. Armrest according to claim 11 or according to claim 12, wherein primary part (P) and secondary part (S) each form, adjacent to and radially inside the annular surface (at Z1, at Z2), a substantially circular-cylindrical recess (46, 47), that the open sides of both circular-cylindrical recesses (46, 47) face one another and that the two circular-cylindrical recesses (46, 47) jointly receive the control ring (R).

14. Armrest according to one of claims 7 to 13, wherein the primary part (P) is disposed in an axially fixed manner on the axle (12) and the secondary part (S) is disposed in an axially movable manner on the axle (12).

15. Armrest according to claim 14, wherein the secondary part (S) is movable counter to spring restoring force axially away from the primary part (P).

16. Armrest according to one of claims 9 to 15, wherein the driving cutout (45) of the control ring (R) has a larger circumferential extent than the driver cam (44) of the primary part (P), such that the primary part (P) not only in a lowered position and at the start of an upward swivel but also in a raised position and at the start of a downward swivel of the armrest body (17) maintains a forward motion until the driver cam (44) strikes against the respective first (49) or second (50) stop face of the driving cutout (46).

17. Armrest according to one of claims 9 to 16, wherein associated with the at least one radial cam (42) is a control cutout (48) that is let into the control path (43) of the secondary part (S) facing the primary part (P).

18. Armrest according to claim 17, wherein the control path (43) forms a flat annular surface extending radially relative to the axle (12).

19. Armrest according to claim 18, wherein an annular step surface of the circular-cylindrical recess (47) of the secondary part (S) that receives the control ring (R) is the control path (43) that forms a flat annular surface.

20. Armrest according to one of claims 17 to 19, wherein the at least one radial cam (42) of the control ring (R) slides out of the control cutout (48) and over onto the flat control path (43) as soon as the driver cam (44) of the primary part (P) during the upward swivel runs against the first stop face (48) of the driving cutout (45) of the control ring (R), and that the at least one radial cam (42) during a continuing upward swivel into the raised position of the armrest body (17) remains on the annular control path (43).

21. Armrest according to one of claims 15 to 20, wherein disposed at the side of the secondary part (S) remote from its spur-gear unit Z2) is an abutment part (W) that is locked against axial displacement on the axle (12), wherein the abutment part (W) is disposed rotationally fixed at least to a limited extent on the axle (12), and wherein secondary part (S) and abutment part (W) are coupled and/or connected to one another in a rotationally fixed manner.

22. Armrest according to claim 21, wherein between the secondary part (S) and the abutment part (W) at least one compression spring (34) is disposed.

23. Armrest according to claim 21 or according to claim 22, wherein the secondary part (S) and the abutment part (W) each form two axially extending, intermeshing clutch pawls (29, 30), which are oriented with their free end regions towards one another and represent the rotationally fixed connection between the axial displaceable secondary part (S) and the abutment part (W), which is rotatably mounted and axially locked on the axle (12).

24. Armrest according to claim 23, wherein each clutch pawl (29, 30) and each indentation (31) of the secondary part (S) and (32) of the abutment part (W) disposed between the feet of two adjacent clutch pawls (29, 29; 30, 30) forms a blind hole (33) for receiving both ends of four circumferentially distributed helical compression springs (34) extending parallel to the axle (12).

25. Armrest according to one of claims 21 to 24, wherein the abutment part is part of an overload protection device that enables a downward swivel of the armrest body situated in the lowered position thereof.

26. Armrest according to claims 1 to 25, wherein a jacket tube (14) coaxially surrounds the ratchet-and-pawl locking mechanism (P, S), the control device (R, 43) and the overload protection device (W, D, T, E).

27. Armrest according to claim 26, wherein the jacket tube (14) forms a rotationally fixed connection between two end regions (17, 18) of the armrest body.

28. Armrest according to one of claims 1 to 27, **characterized in that** the axle (12) along the entire axial length has a spline, wherein on the axle (12) the abutment part (W) is mounted rotatably by a smooth central through-bore (27), while the thrust part (D) is disposed in a rotationally fixed manner on the axle (12) by means of a central receiver (35) profiled in accordance with the spline.

29. Armrest according to claim 28, **characterized in that** the axle (12) has disposed on its circumference at least one receiver, such as e.g. an annular groove (24) for holding an axial locking element, such as e.g. a Seeger circlip ring (28).

## Revendications

1. Repose-bras, tel que repose-bras central (10), avec un corps de repose-bras (17) susceptible de pivoter, de façon réglable, autour d'un axe horizontal (12) entre une position levée et une position abaissée, auquel est associée une sécurité de surcharge (W, D, T, E), qui, à la position abaissée du corps de repose-bras (17), lorsqu'une surcharge se produit, libère un pivotement vers le bas (N) du corps de repose-bras (17), **caractérisé en ce que**, pour former la sécurité de surcharge (W, D, T, E) sur l'axe (12) du repose-bras (10), une partie de contre-appui (W), susceptible d'être reliée en rotation par un de ses côtés au corps de repose-bras (17), est montée en rotation et assurée axialement sur l'axe (12), sur son autre côté, une partie de pressage (D) reliée de façon assujettie en rotation à l'axe (12) et disposée de façon déplaçable axialement, prend appui avec la force de rappel d'au moins un élément élastique (T), la partie de contre-appui (W) et la partie de pressage (D) présentant chacune deux saillies (36, 37) du genre de griffes d'accouplement, s'étendant axialement et orientées les unes vers les autres par leurs zones d'extrémité et s'engageant les unes dans les autres, et les saillies (36, 37) du genre de griffes d'accouplement de la partie de contre-appui (W) de la partie de pressage (D), du point de vue d'un pivotement de levée (A) du corps de repose-bras (17), s'appliquant les unes sur les autres avec deux surfaces de butée (38, 39) s'étendant axialement et radialement et, du point de vue d'un pivotement de descente (A) du corps de repose-bras (17), venant en appui les unes sur les autres, avec des faces de glissement (40, 41) obliques, s'étendant obliquement par rapport à l'axe (12).

2. Repose-bras selon la revendication 1, **caractérisé en ce que** l'axe (12) supporte la partie de pressage (D) de façon déplaçable axialement sur une zone d'axe (53) cylindrique, à section transversale non circulaire, et la forme de section transversale du logement (35) cylindrique, à section transversale non circulaire, de la partie de pressage (D) correspond à la forme de section transversale de la zone d'axe (53) cylindrique à section transversale non circulaire.

3. Repose-bras selon la revendication 2, la zone d'axe (53) cylindrique, à section non circulaire, et le logement (35) cylindrique, à section transversale non circulaire, de la partie de pressage (D) étant formée par une section transversale à quatre pans.

4. Repose-bras selon la revendication 2 ou selon la revendication 3, la force de rappel élastique, sollicitant la partie de pressage (D) dans le sens de la partie de contre-appui (W), étant produite par un paquet de ressorts à disques (T).

5. Repose-bras selon la revendication 4, la force de rappel élastique du paquet de ressorts à disques (T) étant réglable et modifiable, au moyen d'un écrou de réglage (E) monté sur un filetage extérieur, opposé à la partie de pressage (D), de l'axe (12).

6. Repose-bras selon l'une des revendications 1 à 5, la partie de contre-appui (W) étant reliée en rotation, par l'intermédiaire d'une partie secondaire (S) d'un verrou unidirectionnel à rochets (P, S), au corps de repose-bras de robot (17), dans son sens de rotation de descente (N).

7. Repose-bras selon la revendication 6, le verrou unidirectionnel à rochets (P, S), ne bloquant que lors d'un pivotement de descente du corps de repose-bras (17), présentant une partie primaire (P), reliée en rotation au corps repose-bras (17) et susceptible de tourner autour de l'axe (12), partie primaire avec laquelle coopère la partie secondaire (S), maintenue de façon assujettie en rotation au moins de façon limitée par rapport à l'axe (12), sachant qu'au verrou unidirectionnel à rochets (P, S) est associé un dispositif de commande (R, 43) qui, à la position levée et lors du commencement du pivotement de descente du corps de repose-bras (17), sépare l'une de l'autre la partie primaire (P) et la partie secondaire (S) et, dans la zone de la position abaissée, les remet de nouveau en prise, sachant que la partie primaire (P) et la partie secondaire (S) forment des dentures droites (Z1, Z2) tournées l'une vers l'autre, coaxiales par rapport à l'axe (12), disposées à peu près à la façon d'un accouplement à denture droite, et la partie seconaire est déplaçable axialement, et où le dispositif de commande (R, 43), mettant en prise ou hors de prise la partie primaire (P) et la partie secondaire (S), forme au moins une came de commande (42) tournant avec la partie primaire (P), ou au moins une piste de commande tournant avec la partie primaire (P) et, en corrélation avec cela, forme au moins une piste de commande (43) solidaire avec la partie secondaire (S) ou au moins une came de commande solidaire avec la partie secondaire (S).

8. Repose-bras selon la revendication 7, entre la partie primaire (P) et la partie secondaire (S) étant disposée une bague de commande (R), reliée en rotation à la partie primaire (P) et formant, sur sa face tournée vers la partie secondaire (S), la came de commande (42) ou la piste de commande.

9. Repose-bras selon la revendication 8, la partie primaire (P) présentant une came d'organe d'entraînement (44) tournée vers la partie secondaire (S) et qui vient en prise dans un évidement d'entraînement (45), tourné vers la partie primaire (P), de la bague de commande (R), qui, sur sa face tournée vers la partie secondaire (S), forme au moins une came de commande (42), en particulier deux cames de commande (42), coopérant avec la piste de commande (43) solidaire avec la partie secondaire (S).

10. Repose-bras selon la revendication 8 ou selon la revendication 9, la partie primaire (P) et la partie secondaire (S) formant chacune une surface en anneau de cercle radiale, portant la denture frontale (Z1, Z2).

11. Repose-bras selon la revendication 10, le contour extérieur de la surface en anneau de cercle formant en même temps le contour extérieur de la surface de section transversale de la partie primaire (P) et/ou de la partie secondaire (S).

12. Repose-bras selon la revendication 10 ou selon la revendication 11, la denture frontale (Z1, Z2) s'étendant avec la même surface chaque fois sur l'ensemble du pourtour de la partie primaire (P) et de la partie secondaire (S).

13. Repose-bras selon la revendication 11 ou selon la revendication 12, la partie primaire (P) et la partie secondaire (S) formant chacune, en raccordement à la surface en anneau de cercle (en Z1, en Z2), radialement intérieurement, un évidement (46, 47) sensiblement cylindrique à section transversale circulaire, en ce que les faces ouvertes des deux évidements (46, 47) cylindriques à section transversale circulaire sont tournées l'une vers l'autre, et en ce que les deux évidements (46, 47) cylindriques à section transversale circulaire reçoivent conjointement la bague de commande (R).

14. Repose-bras selon l'une des revendications 7 à 13, la partie primaire (P) étant disposée sur l'axe (12) de façon axialement fixe et la partie secondaire (S) étant disposée sur l'axe (12) de façon déplaçable axialement.

15. Repose-bras selon la revendication 14, la partie secondaire (S) étant déplaçable axialement à l'écart de la partie primaire (P), à l'encontre d'une force de rappel élastique.

16. Repose-bras selon l'une des revendications 9 à 15, l'évidement d'entraînement (45) de la bague de commande (R) présentant une étendue périphérique plus importante que la came formant organe d'entraînement (44) de la partie primaire (P), de manière que la partie primaire (P), tant à la position abaissée et au commencement du pivotement de montée, qu'également à la position levée et au commencement du pivotement de descente du corps de repose-bras (17), reçoive une avance jusqu'à la mise en butée de la came d'organe d'entraînement (44) sur la première (49) ou deuxième (50) face de butée respective de l'évidement d'entraînement (46).

17. Repose-bras selon l'une des revendications 9 à 16, à la moins une came de commande (42) étant associé un évidement de commande (48) ménagé dans la piste de commande (43), tournée vers la partie primaire (P), de la partie secondaire (S).

18. Repose-bras selon la revendication 17, la piste de commande (43) formant une face en anneau de cercle plane, s'étendant radialement par rapport à l'axe (12).

19. Repose-bras selon la revendication 18, une face d'échelon, en forme d'anneau de cercle, de l'évidement (47) cylindrique à section transversale circulaire recevant la bague de commande (R), de la partie secondaire (S) constituant la piste de commande (43) formant la face en anneau de cercle plane.

20. Repose-bras selon l'une des revendications 17 à 19, la au moins une came de commande (42) de la bague de commande (R) sortant de l'évidement de commande (48) et glissant en passant sur la piste de commande (43) plane, dès que la came formant organe d'entraînement (44) de la partie primaire (P), lors du pivotement de levée, passe contre la première face de butée (48) de l'évidement d'entraînement (45) de la bague de commande (R), et en ce que la au moins une came de commande (42), lors de la progression du pivotement de levée, reste sur la piste de commande (43) en forme d'anneau de cercle, jusqu'à ce que le corps de repose-bras (17) soit à la position levée.

21. Repose-bras selon l'une des revendications 15 à 20, sur la face, opposée à sa denture frontale (Z2), de la partie secondaire (S), étant disposée une partie de contre-appui (W) assurée sur l'axe (12) contre tout déplacement axial, la partie de déplacement (W) étant disposée de façon assujettie en rotation au moins de façon limitée sur l'axe (12), et la partie secondaire (S) et la partie de contre-appui (W) étant couplées ou reliées ensemble de façon assujettie en rotation.

22. Repose-bras selon la revendication 21, sachant qu'au moins un ressort de compression (34) est disposé entre la partie secondaire (S) et la partie de contre-appui (W).

23. Repose-bras selon la revendication 21, où, selon la revendication 22, la partie secondaire (S) et la partie de contre-appui (W) forment chaque fois deux griffes d'accouplement (29, 30) s'étendant axialement et étant tournées l'une vers l'autre par leurs zones d'extrémité libres et s'engageant les unes dans les autres, griffes qui constituent la liaison assujettie en rotation, entre la partie secondaire (S) déplaçable axialement et la partie de palier (W), montée en rotation sur l'axe (12) et assurée axialement.

24. Repose-bras selon la revendication 23, chaque griffe d'accouplement (29, 30) et chaque creusement (31), disposé entre les pieds de deux griffes d'accouplement (29, 29 ; 30, 30) voisines, de la partie secondaire (S) et (32) de la partie de contre-appui (W), formant respectivement un trou borgne (33) pour le logement chaque fois aux deux extrémités de quatre ressorts de compression hélicoïdaux (34), répartis périphériquement et s'étendant parallèlement à l'axe (12).

25. Repose-bras selon l'une des revendications 21 à 24, la partie de contre-appui étant un composant d'une sécurité de surcharge, qui permet un pivotement de descente du corps de repose-bras se trouvant à sa position abaissée.

26. Repose-bras selon les revendications 1 à 25, un tube enveloppe (14) entourant coaxialement le verrou unidirectionnel à rochets (P, S), le dispositif de commande (R, 43) et la sécurité de surcharge (W, D, T, E).

27. Repose-bras selon la revendication 26, le tube enveloppe (14) formant une liaison assujettie en rotation entre deux zones d'extrémité (17, 18) du corps de repose-bras.

28. Repose-bras selon l'une des revendications 1 à 27, **caractérisé en ce que** l'axe (12) présente sur l'ensemble de la longueur axiale un profil cunéiforme ondulé, sachant que, sur l'axe (12), la partie de contre-appui (W) est montée en palier à rotation avec un perçage traversant (27) central lisse, tandis que la partie de pressage (D) est disposée de façon assujettie en rotation sur l'axe (12), au moyen d'un logement (35) central, profilé de manière correspondante au profilé ondulé cunéiforme.

29. Repose-bras selon la revendication 28, **caractérisé en ce que** l'axe (12) présente au moins un logement disposé sur sa périphérie, tel que, par exemple, une gorge annulaire (24), pour le maintien d'un élément de sécurité axial, tel que, par exemple, un circlip (28).
